# EUROPEAN PATENT APPLICATION

(11) **EP 4 769 049 A2**
(43) Date of publication of application: **01.07.2026**
(21) Application number: 25224817.4
(22) Date of filing: 18.12.2025
(51) Int. Cl.: G05D 1/229, G05D 1/646, G05D 1/65

(54) **TRAVEL CONTROL SYSTEM, WORK VEHICLE, METHOD OF TRAVEL CONTROL, AND COMPUTER PROGRAM**

(30) Priority: 27.12.2024 JP 2024231911
(71) Applicant: Kubota Corporation, Osaka-shi, Osaka 530-0011 (JP)
(72) Inventor: KINOSHITA, Tomohiro, Sakai-shi, Osaka, 590-0908 (JP); HARADA, Tsuyoshi, Sakai-shi, Osaka, 590-0908 (JP)
(74) Representative: Müller-Boré & Partner Patentanwälte PartG mbB

(57) **Abstract**

A travel control system includes a positioning device to output position data of a work vehicle, and a controller configured or programmed to control operation of the work vehicle, operate in a recording mode to store path data concerning a path traveled by the work vehicle including waypoint data acquired based on the position data while the work vehicle is traveling, operate in a reproducing mode to control the operation of the work vehicle while causing the work vehicle to travel via self-driving based on the path data, classify, based on the path data, the path into a first section having a curvature equal to or less than a threshold and a second section having a curvature greater than the threshold, and vary a control method for operation of the work vehicle in the reproducing mode between the first and second sections.

## Description

### CROSS REFERENCE TO RELATED APPLICATIONS

This application claims the benefit of priority to Japanese Patent Application No. 2024-231911 filed on December 27, 2024. The entire contents of this application are hereby incorporated herein by reference.

### BACKGROUND OF THE INVENTION

### 1. Field of the Invention

The present invention relates to travel control systems, work vehicles, methods of travel control, and non-transitory computer-readable media including computer programs.

### 2. Description of the Related Art

As attempts in next-generation agriculture, research and development of smart agriculture utilizing ICT (Information and Communication Technology) and loT (Internet of Things) is under way. Research and development is also directed to the automation and unmanned use of tractors or other work vehicles to be used in the field. For example, work vehicles which travel via automatic steering by utilizing a positioning system that is capable of precise positioning, e.g., a GNSS (Global Navigation Satellite System), are coming into practical use.
International Publication No. 2022/107586 describes a work vehicle that is capable of autonomous movement among a plurality of rows of trees in an orchard, such as a vineyard, by using an SLAM (Simultaneous Localization and Mapping) technique that simultaneously performs localization and map generation. International Publication No. 2022/107586 describes, in an orchard, a work vehicle traveling among a plurality of rows of trees, where the work vehicle performs mowing, preventive pest control, or other work by using an implement (agricultural implement) that is linked to the work vehicle.

### SUMMARY OF THE INVENTION

There is also a need for automation and unmanned application of work that is performed while a work vehicle travels in a field (e.g., an orchard). Work that is performed during the travel of a work vehicle in a field may involve the same task being iteratively performed multiple times. For example, tasks such as mowing and preventive pest control may be iteratively performed multiple times for the same field. When the same task is iteratively performed, the work vehicle performs the same task while traveling along the same path in the field in the same way. In such a case, performing every instance of autonomous travel by, e.g., a SLAM technique will lead to an unwanted increase in the processing load for the autonomous travel.

Efficiently performing iterative operations of a work vehicle is required not only in agricultural machines, but also in work vehicles that are for non-agricultural uses, such as construction vehicles or snowplow vehicles. Furthermore, even in the cases of travel that does not involve work of a work vehicle, it is necessary to efficiently carry out any travel that is performed iteratively along the same path.

Example embodiments of the present invention provide travel control systems, work vehicles, and methods of travel control that enable efficient performance of iterative operations (including travel and other operations) of a work vehicle.

According to example embodiments of the present invention, solutions as described in the following Items are provided.

### [Item a1]

A travel control system for a work vehicle, the travel control system including a positioning device to output position data concerning a position of the work vehicle, and a controller configured or programmed to control operation of the work vehicle, operate in a recording mode to record to a storage device path data concerning a path traveled by the work vehicle, the path data including multiple pieces of waypoint data acquired based on the position data while the work vehicle is traveling, each piece of the waypoint data including information concerning the position of the work vehicle, operate in a reproducing mode to control the operation of the work vehicle while causing the work vehicle to travel via self-driving based on the path data, classify, based on the path data, the path into a first section having a curvature that is equal to or less than a threshold and a second section having a curvature that is greater than the threshold, and vary a control method for operation of the work vehicle in the reproducing mode between the first section and the second section.

### [Item a2]

The travel control system of Item a1, wherein the controller is configured or programmed to, in the reproducing mode, vary the operation of the work vehicle between when the work vehicle is traveling in the first section and when the work vehicle is traveling in the second section.

### [Item a3]

The travel control system of Item a2, wherein the controller is configured or programmed to, in the reproducing mode, vary a speed and/or an engine speed of the work vehicle between when the work vehicle is traveling in the first section and when the work vehicle is traveling in the second section.

### [Item a4]

The travel control system of Item a3, wherein the controller is configured or programmed to determine a first speed of the work vehicle and a second speed of the work vehicle, the second speed being smaller than the first speed, in the reproducing mode, cause the work vehicle to travel at the first speed while the work vehicle is traveling in the first section, and, in the reproducing mode, cause the work vehicle to travel at the second speed while the work vehicle is traveling in the second section.

### [Item a5]

The travel control system of Item a4, wherein the controller is configured or programmed to determine the first speed and the second speed based on a user input.

### [Item a6]

The travel control system of any one of Items a2 to a5, wherein the controller is configured or programmed to determine a first engine speed of the work vehicle and a second engine speed of the work vehicle, the second engine speed being smaller than the first engine speed, in the reproducing mode, cause the work vehicle to travel at the first engine speed while the work vehicle is traveling in the first section, and, in the reproducing mode, cause the work vehicle to travel at the second engine speed while the work vehicle is traveling in the second section.

### [Item a7]

The travel control system of Item a6, wherein the controller is configured or programmed to determine the first engine speed and the second engine speed based on a user input.

### [Item a8]

The travel control system of any one of Items a2 to a7, wherein the controller is configured or programmed to, in the reproducing mode, decelerate the work vehicle while the work vehicle is traveling in the first section, and, in the reproducing mode, accelerate the work vehicle while the work vehicle is traveling in the second section.

### [Item a9]

The travel control system of Item a8, wherein the path includes a plurality of the first sections and a plurality of the second sections by which the plurality of first sections are connected, and the controller is configured or programmed to, while the work vehicle is traveling in the first section in the reproducing mode, decelerate the work vehicle in a portion leading to the second section, and, while the work vehicle is traveling in the second section in the reproducing mode, accelerate the work vehicle in a portion leading to the first section.

### [Item a10]

The travel control system of any one of Items a2 to a9, wherein the work vehicle has an implement linked thereto, the work vehicle includes a linkage device to which the implement is connected, the linkage device includes a three-point hitch to adjust a height of the implement, and the controller is configured or programmed to, in the reproducing mode, vary the height of the three-point hitch between when the work vehicle is traveling in the first section and when the work vehicle is traveling in the second section.

### [Item a11]

The travel control system of Item a10, wherein the controller is configured or programmed to, in the reproducing mode, ensure that the height of the three-point hitch is higher while the work vehicle is traveling in the second section than while the work vehicle is traveling in the first section.

### [Item a12]

The travel control system of any one of Items a2 to a11, wherein the work vehicle has an implement linked thereto, the work vehicle includes a linkage device to which the implement is connected, the linkage device includes a PTO shaft to supply motive power to the implement, and the controller is configured or programmed to, in the reproducing mode, switch rotation of the PTO shaft ON or OFF between when the work vehicle is traveling in the first section and when the work vehicle is traveling in the second section.

### [Item a13]

The travel control system of Item a12, wherein the controller is configured or programmed to, in the reproducing mode, turn rotation of the PTO shaft ON while the work vehicle is traveling in the first section, and, in the reproducing mode, turn rotation of the PTO shaft OFF while the work vehicle is traveling in the second section.

### [Item a14]

The travel control system of any one of Items a1 to a13, wherein the controller is configured or programmed to, when a manipulation for causing the work vehicle to begin traveling in the reproducing mode is performed by a user, compare, against a predetermined value, a difference between a position of the work vehicle assumed when the manipulation is performed and a position of a reference start point in the path data at which referencing is to begin with the manipulation, cause the work vehicle to begin traveling if the difference is equal to or less than the predetermined value, not allow the work vehicle to begin traveling if the difference is greater than the predetermined value, and ensure that the predetermined value is smaller when the reference start point is included in the second section than when the reference start point is included in the first section.

### [Item a15]

The travel control system of any one of Items a1 to a14, wherein the controller is configured or programmed to, when a manipulation for causing the work vehicle to begin traveling in the reproducing mode is performed by a user, compare, against a predetermined value, a difference between an azimuth of the work vehicle assumed when the manipulation is performed and an azimuth of a reference start point in the path data at which referencing is to begin with the manipulation, cause the work vehicle to begin traveling if the difference is equal to or less than the predetermined value, not allow the work vehicle to begin traveling if the difference is greater than the predetermined value, and ensure that the predetermined value is smaller when the reference start point is included in the second section than when the reference start point is included in the first section.

### [Item a16]

The travel control system of any one of Items a1 to a15, wherein the controller is configured or programmed to record, to the storage device, other path data concerning another path that is generated by editing the path data that is recorded in the storage device, and, when a manipulation for beginning editing of the path data is performed by a user, permit editing of the path data to be begun if an edit start point is included in the first section, and prohibit editing of the path data from beginning if the edit start point is included in the second section.

### [Item a17]

The travel control system of any one of Items a1 to a16, wherein the path includes a path of traveling in a field, the first section includes a plurality of parallel main paths, and the second section includes a plurality of turning paths by which the plurality of main paths are connected.

### [Item a18]

A work vehicle including a travel control system of any one of Items a1 to a17, a travel device including a wheel responsible for steering, and a driver to drive the travel device, wherein, in the reproducing mode, the controller is configured or programmed to cause the work vehicle to travel via self-driving by controlling the driver based on the multiple pieces of the waypoint data included in the path data.

### [Item a19]

A method of travel control for a work vehicle to be executed by a controller configured or programmed to control operation of a work vehicle and to operate in a recording mode and a reproducing mode, the method including, in the recording mode, while the work vehicle is traveling, recording to a storage device path data concerning a path traveled by the work vehicle, the path data including multiple pieces of waypoint data acquired based on position data concerning a position of the work vehicle while the work vehicle is traveling, each piece of the waypoint data including information concerning the position of the work vehicle, in the reproducing mode, controlling the operation of the work vehicle while causing the work vehicle to travel via self-driving based on the path data, classifying, based on the path data, the path into a first section having a curvature that is equal to or less than a threshold and a second section having a curvature that is greater than the threshold, and varying a control method for operation of the work vehicle in the reproducing mode between the first section and the second section.

### [Item a20]

A non-transitory computer-readable medium including a computer program to be executed by a processor in a controller configured or programmed to control operation of a work vehicle and operate in a recording mode and a reproducing mode, the computer program being executable to cause the processor to perform, in the recording mode, while the work vehicle is traveling, recording to a storage device path data concerning a path traveled by the work vehicle, the path data including multiple pieces of waypoint data acquired based on position data concerning a position of the work vehicle while the work vehicle is traveling, each piece of the waypoint data including information concerning the position of the work vehicle, in the reproducing mode, controlling the operation of the work vehicle while causing the work vehicle to travel via self-driving based on the path data, classifying, based on the path data, the path into a first section having a curvature that is equal to or less than a threshold and a second section having a curvature that is greater than the threshold, and varying a control method for operation of the work vehicle in the reproducing mode between the first section and the second section.

### [Item b1]

A travel control system for a work vehicle, the travel control system including a positioning device to output position data concerning a position of the work vehicle, and a controller configured or programmed to control operation of the work vehicle, operate in a recording mode to record to a storage device path data concerning a path traveled by the work vehicle, the path data including multiple pieces of waypoint data acquired based on the position data while the work vehicle is traveling, each piece of the waypoint data including information concerning the position of the work vehicle, operate in a reproducing mode to control the operation of the work vehicle while causing the work vehicle to travel via self-driving based on the path data, select three pieces of the waypoint data including any one of the multiple pieces of the waypoint data and two other pieces of the waypoint data being located on both sides of the one piece of the waypoint data and each being in a position that is a predetermined distance or greater away from the position of the one piece of the waypoint data, determine a circle defined by positions of three points that are based on the three pieces of the waypoint data, and classify, based on a radius of the circle, the path into a first section having a radius of curvature that is equal to or greater than a threshold and a second section having a radius of curvature that is less than the threshold.

### [Item b2]

The travel control system of Item b1, wherein the controller is configured or programmed to determine a curvature of the path at the one piece of the waypoint data based on a radius of the circle, and based on the curvature determined at each point in the path, classify the path into the first section and the second section.

### [Item b3]

The travel control system of Item b1 or b2, wherein the predetermined distance is greater than an interval between the positions of consecutive pieces of the waypoint data among the multiple pieces of the waypoint data.

### [Item b4]

The travel control system of any one of Items b1 to b3, wherein the controller is configured or programmed to determine the threshold based on a user input.

### [Item b5]

The travel control system of any one of Items b1 to b4, wherein the controller is configured or programmed to determine the predetermined distance based on a user input.

### [Item b6]

The travel control system of any one of Items b1 to b5, wherein the controller is configured or programmed to cause a display to indicate a graphical user interface (GUI) to allow a user to set the threshold and the predetermined distance.

### [Item b7]

The travel control system of Item b6, wherein the controller is configured or programmed to, based on the threshold and the predetermined distance that are input via the GUI, cause the display to further indicate an image indicating a result of classifying the path into the first section and the second section.

### [Item b8]

The travel control system of Item b7, wherein the controller is configured or programmed to, when the threshold and/ or the predetermined distance that are input via the GUI are changed, change the image to an image indicating a result of classifying the path into the first section and the second section as based on the changed threshold and/or predetermined distance.

### [Item b9]

The travel control system of any one of Items b1 to b8, wherein the controller is configured or programmed to vary a control method for operation of the work vehicle in the reproducing mode between the first section and the second section.

### [Item b10]

A work vehicle including the travel control system of any one of Items b1 to b9, a travel device including wheels responsible for steering, and a first driver to drive the travel device, wherein, in the reproducing mode, the controller is configured or programmed to cause the work vehicle to travel via self-driving by controlling the driver based on the multiple pieces of the waypoint data included in the path data.

### [Item b11]

A method of travel control for a work vehicle to be executed by a controller configured or programmed to control operation of a work vehicle and operate in a recording mode and a reproducing mode, the method including, in the recording mode, while the work vehicle is traveling, recording to a storage device path data concerning a path traveled by the work vehicle, the path data including multiple pieces of waypoint data acquired based on position data concerning a position of the work vehicle while the work vehicle is traveling, each piece of the waypoint data including information concerning the position of the work vehicle, in the reproducing mode, controlling the operation of the work vehicle while causing the work vehicle to travel via self-driving based on the path data, selecting three pieces of the waypoint data including any one of the multiple pieces of the waypoint data, and two other pieces of the waypoint data being located on both sides of the one piece of the waypoint data and each being in a position that is a predetermined distance or greater away from the position of the one piece of the waypoint data, determining a circle defined by positions of three points that are based on the three pieces of the waypoint data, and classifying, based on a radius of the circle, the path into a first section having a radius of curvature that is equal to or greater than a threshold and a second section having a radius of curvature that is less than the threshold.

### [Item b12]

A non-transitory computer-readable medium including a computer program to be executed by a processor in a controller configured or programmed to control operation of a work vehicle and operate in a recording mode and a reproducing mode, the computer program being executable to cause the processor to perform, in the recording mode, while the work vehicle is traveling, recording to a storage device path data concerning a path traveled by the work vehicle, the path data including multiple pieces of waypoint data acquired based on position data concerning a position of the work vehicle while the work vehicle is traveling, each piece of the waypoint data including information concerning the position of the work vehicle, in the reproducing mode, controlling the operation of the work vehicle while causing the work vehicle to travel via self-driving based on the path data, selecting three pieces of the waypoint data including any one of the multiple pieces of the waypoint data, and two other pieces of the waypoint data being located on both sides of the one piece of the waypoint data and each being in a position that is a predetermined distance or greater away from the position of the one piece of the waypoint data, determining a circle defined by positions of three points that are based on the three pieces of the waypoint data, and classifying, based on a radius of the circle, the path into a first section having a radius of curvature that is equal to or greater than a threshold and a second section having a radius of curvature that is less than the threshold.

### [Item c1]

A controller configured or programmed to perform the method of travel control of Item a19 or b11.

### [Item c2]

A non-transitory computer-readable medium including a computer program to be executed by a computer configured or programmed to control operation of a work vehicle, wherein the computer program is executable to cause the computer to perform the method of travel control of Item a19 or b11.

### [Item c3]

A travel control system for a work vehicle, the travel control system including a positioning device to output position data concerning a position of the work vehicle, and the controller of Item c1.

### [Item c4]

A controller configured or programmed to control operation of a work vehicle, operate in a recording mode to record to a storage device path data concerning a path traveled by the work vehicle, the path data including multiple pieces of waypoint data acquired based on position data of the work vehicle while the work vehicle is traveling, each piece of the waypoint data including information concerning the position of the work vehicle, operate in a reproducing mode to control the operation of the work vehicle while causing the work vehicle to travel via self-driving based on the path data, classify, based on the path data, the path into a first section having a curvature that is equal to or less than a threshold and a second section having a curvature that is greater than the threshold, and vary a control method for operation of the work vehicle in the reproducing mode between the first section and the second section.

### [Item c5]

A controller configured or programmed to control operation of a work vehicle, operate in a recording mode to record to a storage device path data concerning a path traveled by the work vehicle, the path data including multiple pieces of waypoint data acquired based on position data of the work vehicle while the work vehicle is traveling, each piece of the waypoint data including information concerning the position of the work vehicle, operate in a reproducing mode to control the operation of the work vehicle while causing the work vehicle to travel via self-driving based on the path data, select three pieces of the waypoint data including any one of the multiple pieces of the waypoint data, and two other pieces of the waypoint data being located on both sides of the one piece of the waypoint data and each being in a position that is a predetermined distance or greater away from the position of the one piece of the waypoint data, determine a circle defined by positions of three points that are based on the three pieces of the waypoint data, and classify, based on a radius of the circle, the path into a first section having a radius of curvature that is equal to or greater than a threshold and a second section having a radius of curvature that is less than the threshold.

### [Item c6]

A travel control system for a work vehicle, the travel control system including a positioning device to output position data concerning a position of the work vehicle, and the controller of c4 or c5.

### [Item c7]

A controller including one or more processors, and one or more memories storing a computer program executable to cause the one or more processors to perform the method of travel control of Item a19 or b11.

### [Item c8]

A travel control system including the controller of Item c7, and a first driver to drive a travel device of the work vehicle, and in the reproducing mode, the controller is configured or programmed to cause the work vehicle to travel via self-driving by controlling the first driver based on the position data recorded in the storage device.

Example embodiments of the present invention may be implemented using devices, systems, methods, integrated circuits, computer programs, non-transitory computer-readable storage media, or any combination thereof. The computer-readable storage media may be inclusive of volatile storage media, or non-volatile storage media. The device may include a plurality of devices. In the case where the device includes two or more devices, the two or more devices may be provided within a single apparatus, or divided over two or more separate apparatuses.

According to example embodiments of the present invention, travel control systems, work vehicles, and methods of travel control that enable efficient performance of iterative operations (including travel and other operations) of work vehicles are provided.

The above and other elements, features, steps, characteristics and advantages of the present invention will become more apparent from the following detailed description of the example embodiments with reference to the attached drawings.

### BRIEF DESCRIPTION OF THE DRAWINGS

FIG. **1** is a side view schematically showing an example of a work vehicle according to an example embodiment of the present invention.
FIG. **2** is a block diagram schematically showing an example configuration for a work vehicle and an implement according to an example embodiment of the present invention.
FIG. **3A** is a block diagram showing a schematic example configuration for a travel control system according to an example embodiment of the present invention.
FIG. **3B** is a block diagram showing an example configuration for a controller included in a travel control system according to an example embodiment of the present invention.
FIG. **4** is a schematic diagram showing an example configuration for a travel control system according to an example embodiment of the present invention.
FIG. **5** is a diagram schematically showing an example environment to be traveled by a work vehicle according to an example embodiment of the present invention.
FIG. **6A** is a diagram schematically showing an example of a path to be traveled by a work vehicle according to an example embodiment of the present invention in a recording mode.
FIG. **6B** is a diagram schematically showing a path to be traveled by a work vehicle according to an example embodiment of the present invention in a reproducing mode.
FIG. **7** is a diagram schematically showing another example of a path to be traveled by a work vehicle according to an example embodiment of the present invention.
FIG. **8** is a diagram schematically showing another example of a path to be traveled by a work vehicle according to an example embodiment of the present invention.
FIG. **9A** is a flowchart showing an example processing to be performed by the controller in the recording mode.
FIG. **9B** is a flowchart showing another example processing to be performed by the controller in the recording mode.
FIG. **9C** is a flowchart showing still another example processing to be performed by the controller in the recording mode
FIG. **10** is a diagram showing an example of waypoint data.
FIG. **11** is a flowchart showing an example processing to be performed by the controller in the reproducing mode.
FIG. **12A** is a diagram schematically showing an example processing to be performed by a controller of a travel control system according to an example embodiment of the present invention.
FIG. **12B** is a diagram schematically showing an example processing to be performed by a controller of a travel control system according to an example embodiment of the present invention.
FIG. **12C** is a diagram schematically showing an example processing to be performed by a controller of a travel control system according to an example embodiment of the present invention.
FIG. **13** is a diagram showing an example of operation switches and an operation terminal provided in a cabin that is included in a work vehicle.
FIG. **14** is a flowchart showing an example processing to be performed by the controller.
FIG. **15A** is a diagram schematically showing an example processing to be performed by the controller.
FIG. **15B** is a diagram schematically showing an example processing to be performed by the controller.
FIG. **16A** is a flowchart showing an example processing to be performed by the controller in the reproducing mode.
FIG. **16B** shows an example of a screen image to be displayed on a terminal device that is operated by a user who performs manipulations under the reproducing mode.
FIG. **17** is a schematic diagram for describing an example processing that is performed by the controller.
FIG. **18A** is a schematic diagram for describing an example processing that is performed by the controller.
FIG. **18B** is a flowchart showing an example processing to be performed by the controller when a manipulation for beginning the reproducing mode is made.
FIG. **19A** is a schematic diagram for describing an example processing that is performed by the controller.
FIG. **19B** is a schematic diagram for describing an example processing that is performed by the controller.
FIG. **19C** is a flowchart showing an example processing to be performed by the controller.
FIG. **20** is a flowchart showing an example processing to be performed by the controller.
FIG. **21A** is a schematic diagram for describing an example method of classifying a path into first sections and second sections.
FIG. **21B** is a schematic diagram for describing an example method of classifying a path into first sections and second sections.
FIG. **21C** is a schematic diagram for describing an example method of classifying a path into first sections and second sections.
FIG. **21D** is a schematic diagram for describing an example method of classifying a path into first sections and second sections.
FIG. **22A** is a diagram showing an example result of classifying a path into first sections and second sections.
FIG. **22B** is a diagram showing an example result of classifying a path into first sections and second sections.
FIG. **23A** shows an example of a screen image to be displayed on a terminal device that is operated by a user who performs manipulations under the reproducing mode.
FIG. **23B** shows an example of a screen image to be displayed on a terminal device that is operated by a user who performs manipulations under the reproducing mode.

### DETAILED DESCRIPTION OF THE EXAMPLE EMBODIMENTS

In the present specification, a "work vehicle" means a vehicle for use in performing work in a work area. A "work area" is any place where work may be performed, e.g., a field, a mountain forest, or a construction site. A "field" is any place where agricultural work may be performed, e.g., an orchard, an agricultural field, a paddy field, a cereal farm, or a pasture. A work vehicle can be an agricultural machine such as a tractor, a rice transplanter, a combine, a vehicle for crop management, or a riding mower, or a vehicle for non-agricultural purposes such as a construction vehicle or a snowplow vehicle. A work vehicle may be configured so that an implement (also referred to as a "task device" or a "task apparatus") that is suitable for the content of work can be attached to at least one of its front and its rear. In particular, an implement that is attached to an agricultural tractor may be referred to as an "agricultural implement". Traveling of a work vehicle that occurs while the work vehicle performs work by using an implement may be referred to as "tasked travel". The "operation" of a work vehicle includes not only travel of the work vehicle but also other operations.

"Self-driving" means controlling the travel of a vehicle based on the action of a controller, rather than through manual operation of a driver. During self-driving, not only the travel of the vehicle, but also the task operation (e.g., the operation of the implement) may also be automatically controlled. A vehicle that is traveling via self-driving is said to be "self-traveling". The controller may be configured or programmed to control at least one of steering, adjustment of traveling speed, and starting and stopping of travel as are necessary for the travel of vehicle. In the case of controlling a work vehicle having an implement attached thereto, the controller may be configured or programmed to control operations such as raising or lowering of the implement, starting and stopping of the operation of the implement, and the like. Travel via self-driving includes not only the travel of a vehicle toward a destination along a predetermined path, but also the travel of merely following a target of tracking. A vehicle performing self-driving may operate not only in a self-driving mode but also in a manual driving mode of traveling through manual operation of the driver. Traveling through manual operation of the driver is referred to as "manual traveling". "Manual operation of a driver" includes not only manual operation by a driver on the vehicle, but also remote manipulation by a driver (operator) outside the vehicle. A vehicle performing self-driving may travel partly based on manual operation of the driver. The steering of a vehicle that is based on the action of a controller, rather than manual operation of the driver, is referred to as "automatic steering". A portion or an entirety of the controller may be external to the vehicle. Between the vehicle and a controller that is external to the vehicle, communication of control signals, commands, data, or the like may be performed. A vehicle performing self-driving may autonomously travel while sensing the surrounding environment, without any person being involved in the control of the travel of the vehicle. A vehicle that is capable of autonomous travel can travel in an unmanned manner. During autonomous travel, detection of obstacles and avoidance of obstacles may be performed.

A "crop row" is a row of agricultural items, trees, or other plants that may grow in rows on a field, e.g., an orchard or an agricultural field, or in a forest or the like. In the present specification, a "crop row" encompasses a "row of trees".

Hereinafter, example embodiments of the present invention will be described more specifically. Note however that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand example embodiments of the present invention, are not intended to limit the scope of claims. In the following description, component elements having identical or similar functions are denoted by identical reference numerals.

The following example embodiments are only exemplary, and the techniques according to example embodiments of the present invention are not limited to the following preferred example embodiments. For example, numerical values, shapes, materials, steps, orders of steps, etc., that are indicated in the following example embodiments are only exemplary, and admit of various modifications so long as it makes technological sense. Any one example embodiment may be combined with another.

Hereinafter, as one example, an example embodiment where the work vehicle is a tractor for use in agricultural work in a field such as an orchard will be described. Without being limited to tractors, the techniques according to example embodiments of the present invention is also applicable to other type of agricultural machines such as a rice transplanter, a combine, a vehicle for crop management, or a riding lawn mower, for example. The techniques according to example embodiments of the present invention are also applicable to vehicles for non-agricultural purposes such as a construction vehicle or a snowplow vehicle. Furthermore, the techniques according to example embodiments of the present invention is applicable to travel of a work vehicle other than in work areas, and also to travel that does not involve any work by the work vehicle.

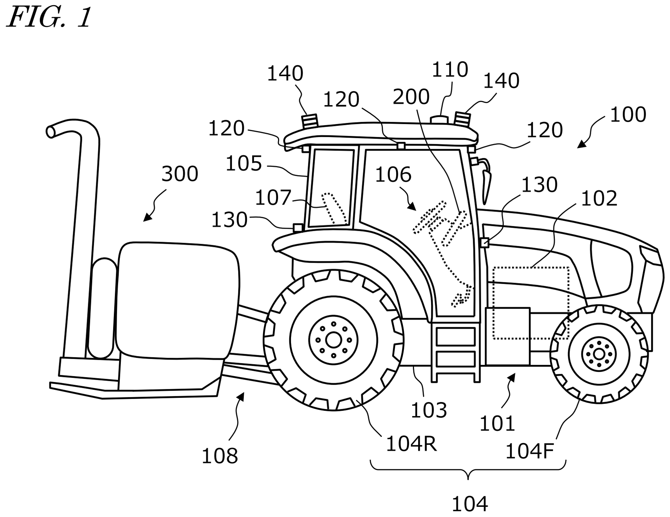

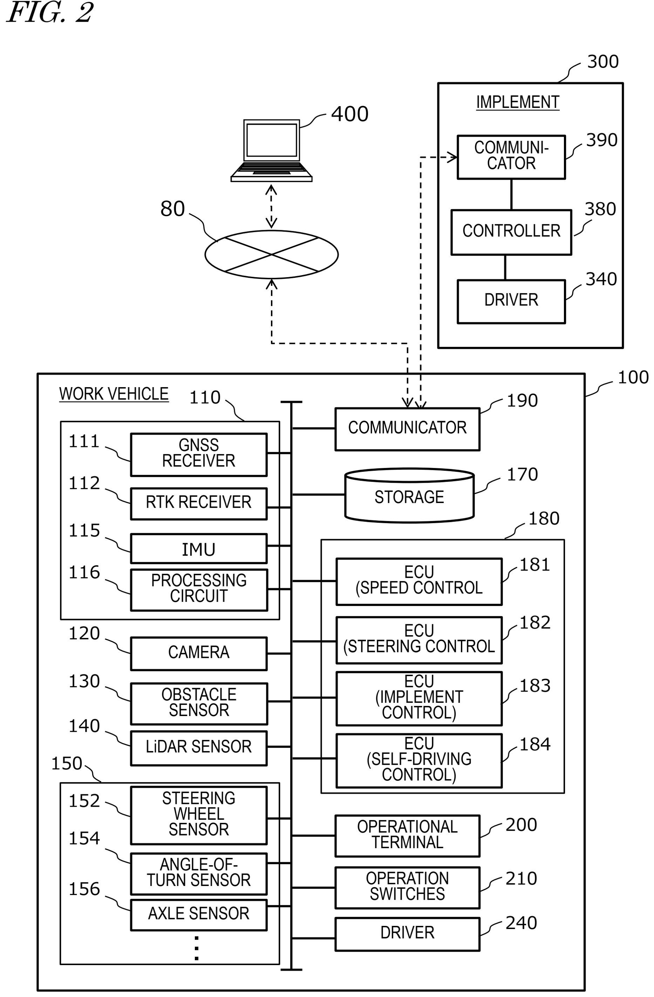

FIG. 1 is a side view schematically showing an example of a work vehicle 100 and an implement 300 that is linked to the work vehicle 100. FIG. 2 is a block diagram schematically showing an example configuration for the work vehicle **100** and the implement **300.**

As shown in in FIG. **1** and FIG. **2****,** the work vehicle **100** includes a positioning device **110** to output position data concerning the position of the work vehicle 100 (e.g., a GNSS unit), and a controller **180** configured or programmed to control the operation of the work vehicle **100.**

The work vehicle **100** may further include a sensor group **150** to output sensor data concerning the state of the work vehicle **100.** The sensor group **150** includes one or more internal sensors. An "internal sensor" is inclusive of a variety of sensors that detect the state of the work vehicle **100.**

The work vehicle **100** may further include a plurality of external sensors to sense the surroundings of the work vehicle **100.** An "external sensor" is a sensor that senses the external state of the work vehicle. In the example of FIG. **1****,** the external sensors include a plurality of LiDAR sensors **140,** a plurality of cameras **120,** and a plurality of obstacle sensors **130.**

In addition to the positioning device **110,** the cameras **120,** the obstacle sensors **130,** and the LiDAR sensors **140,** the sensor group **150,** a storage device **170,** the controller **180,** and an operation terminal **200,** the work vehicle **100** in the example of FIG. **2** also includes a communicator **190,** operation switches **210,** and a driver **240** (which may be referred to as a "first driver"). These component elements are communicably connected to one another via a bus.

As shown in FIG. **1****,** the work vehicle **100** includes a vehicle body **101,** a prime mover (engine) **102,** and a transmission **103.** On the vehicle body **101,** a travel device, which includes wheels **104** with tires, and a cabin **105** are provided. The travel device includes four wheels **104,** and axles to cause the four wheels to rotate, and braking device (brakes) to brake on each axle. The wheels **104** include a pair of front wheels **104F** and a pair of rear wheels **104R.** Inside the cabin **105,** a driver's seat **107,** a steering device **106,** an operation terminal **200,** and switches for manipulation are provided. The front wheels **104F** and/or the rear wheels **104R** may be replaced by a plurality of wheels with a track (crawlers), rather than wheels with tires, attached thereto.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the work vehicle **100.** The steering angle of the front wheels **104F** can be changed by manipulating the steering wheel. The power steering device includes a hydraulic device or an electric motor to supply an assisting force for changing the steering angle of the front wheels **104F.** When automatic steering is performed, under the control of the controller included in the work vehicle **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point hitch" or a "three-point link"), a PTO (Power Take Off) shaft, a universal joint, and a communication cable. The linkage device **108** allows the implement **300** to be attached to, or detached from, the work vehicle **100.** The linkage device **108** is able to raise or lower the three-point hitch with a hydraulic device, for example, thus changing the position or attitude of the implement **300.** Moreover, motive power can be sent from the work vehicle **100** to the implement **300** via the universal joint. While towing the implement **300,** the work vehicle **100** allows the implement **300** to perform a predetermined task. The linkage device may be provided at the front portion of the vehicle body **101.** In that case, the implement can be connected at the front portion of the work vehicle **100.**

Although the implement **300** shown in FIG. **1** is a sprayer to spray a chemical agent onto a crop, the implement **300** is not limited to a sprayer. For example, any arbitrary task device such as a mower, a seeder, a spreader, a rake, a baler, a harvester, a plow, a harrow, or a rotary tiller may be connected to the work vehicle **100** for use.

The positioning device **110** receives satellite signals (also referred to as GNSS signals) that are transmitted from a plurality of GNSS satellites, and performs positioning based on the satellite signals. GNSS is a collective term for satellite positioning systems such as the GPS (Global Positioning System), QZSS (Quasi-Zenith Satellite System, e.g., MICHIBIKI), GLONASS, Galileo, and BeiDou. Although the positioning device 110 in the present example embodiment is located above the cabin **105,** it may be located at any other position.

As shown in FIG. **2****,** the positioning device **110** includes a GNSS receiver **111,** an RTK receiver **112,** and a processing circuit **116.** The positioning device **110** may further include an inertial measurement unit (IMU) **115.**

The GNSS receiver **111** includes an antenna to receive signals from the GNSS satellites, and a processing circuit to determine the position of the work vehicle 100 based on the signals received by the antenna. The GNSS receiver **111** in the GNSS unit **110** receives satellite signals transmitted from the plurality of GNSS satellites and generates GNSS data based on the satellite signals. The GNSS data is generated in a predetermined format such as, for example, the NMEA-0183 format. The GNSS data may include, for example, the ID number, the angle of elevation, the azimuth angle, and a value representing the reception intensity of each of the satellites from which the satellite signals are received.

The positioning device **110** may perform positioning of the work vehicle **100** by utilizing an RTK (Real Time Kinematic)-GNSS. In the positioning based on the RTK-GNSS, not only satellite signals transmitted from a plurality of GNSS satellites, but also a correction signal that is transmitted from a reference station is used. The reference station may be located near the work area where the work vehicle **100** performs tasked travel (e.g., at a position within 10 km of the work vehicle **100**). The reference station generates a correction signal of, for example, an RTCM format based on the satellite signals received from the plurality of GNSS satellites, and transmits the correction signal to the positioning device **110.** The RTK receiver **112,** which includes an antenna and a modem, receives the correction signal transmitted from the reference station. Based on the correction signal, the processing circuit **116** of the positioning device **110** corrects the results of the positioning performed by the GNSS receiver **111.** Use of the RTK-GNSS enables positioning with an accuracy on the order of several centimeters of errors, for example. Positional information including latitude, longitude, and altitude information is acquired through the highly accurate positioning by the RTK-GNSS. The positioning device **110** calculates the position of the work vehicle **100** as frequently as, for example, one to ten times per second. Note that the positioning method is not limited to being performed by using an RTK-GNSS, and any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System).

The positioning device **110** according to the present example embodiment may further include the IMU **115.** With the inclusion of the IMU **115,** the positioning device **110** can complement position data by utilizing signals from the IMU. The data acquired by the IMU **115** can be used to complement the position data based on the satellite signals, so as to improve the performance of positioning.

The IMU **115** may include a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the work vehicle **100.** Based not only on the satellite signals and the correction signal but also on a signal that is output from the IMU **115,** the processing circuit **116** can estimate the position and orientation of the work vehicle **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** For example, the IMU **115** outputs a signal as frequently as approximately several ten times to several thousand times per second. Utilizing this signal that is output highly frequently, the processing circuit **116** allows the position and orientation of the work vehicle **100** to be measured more frequently (e.g., about 10 Hz or above). Instead of the IMU **115,** a 3-axis accelerometer and a 3-axis gyroscope may be separately provided. The IMU **115** may be provided as a separate device from the positioning device **110.**

The sensor group **150** may include various sensors to detect the state of the work vehicle **100** or the implement **300** (i.e., interior sensors). For example, the sensor group **150** may include a steering wheel sensor **152,** an angle-of-turn sensor **154,** and an axle sensor **156.**

The steering wheel sensor **152** measures the angle of rotation of the steering wheel of the work vehicle **100.** The angle-of-turn sensor **154** measures the angle of turn of the front wheels **104F,** which are the wheels responsible for steering. Measurement values by the steering wheel sensor **152** and the angle-of-turn sensor **154** may be used for steering control by the controller **180.**

The axle sensor **156** measures the rotational speed, i.e., the number of revolutions per unit time, of an axle that is connected to the wheels **104.** The axle sensor **156** may be a sensor including a magnetoresistive element (MR), a Hall generator, or an electromagnetic pickup, for example. The axle sensor **156** outputs a numerical value indicating the number of revolutions per minute (unit: rpm) of the axle, for example. The axle sensor **156** is used to measure the speed of the work vehicle **100.** Measurement values from the axle sensor **156** can be utilized for the speed control by the controller **180.**

The storage device **170** includes one or more storage media such as a flash memory or a magnetic disc. The storage device **170** stores various data that is generated by the positioning device **110,** the cameras **120,** the obstacle sensors **130,** and the LiDAR sensors **140,** the sensor group **150,** and the controller **180.** The data that is stored by the storage device **170** may include an environment map of the environment where the work vehicle **100** travels, an obstacle map that is consecutively generated during travel, and path data for self-driving. The storage device **170** also stores a computer program(s) to cause each of the ECUs in the controller **180** to perform various operations described below. Such a computer program(s) may be provided to the work vehicle **100** via a storage medium (e.g., a semiconductor memory, an optical disc, etc.) or through telecommunication lines (e.g., the Internet). Such a computer program(s) may be marketed as commercial software.

The controller **180** includes the plurality of ECUs. The plurality of ECUs include, for example, the ECU **181** for speed control, the ECU **182** for steering control, the ECU **183** for implement control, and the ECU **184** for self-driving control.

The ECU **181** is configured or programmed to control the prime mover **102,** the transmission **103,** and brakes included in the driver **240,** thus controlling the speed of the work vehicle **100.**

The ECU **182** is configured or programmed to control the hydraulic device or the electric motor included in the steering device **106** based on a measurement value of the steering wheel sensor **152,** thus controlling the steering of the work vehicle **100.**

In order to cause the implement **300** to perform a desired operation, the ECU **183** is configured or programmed to control the operations of the three-point hitch, the PTO shaft, and the like that are included in the linkage device **108.** Also, the ECU **183** is configured or programmed to generate a signal to control the operation of the implement **300,** and transmits this signal from the communicator **190** to the implement **300.**

Based on data output from the positioning device **110,** the cameras **120,** the obstacle sensors **130,** and the LiDAR sensors **140,** and the sensor group **150,** the ECU **184** is configured or programmed to perform computation and control for achieving self-driving. For example, the ECU **184** is configured or programmed to estimate the position of the work vehicle **100** based on the data output from at least one of the positioning device **110,** the cameras **120,** and the LiDAR sensors **140.** In a situation where a sufficiently high reception intensity exists for the satellite signals from the GNSS satellites, the ECU **184** may be configured or programmed to determine the position of the work vehicle **100** based only on the data output from the positioning device **110.** On the other hand, in an environment where obstructions, such as trees, that may hinder reception of the satellite signals exist around the work vehicle **100,** e.g., an orchard, the ECU **184** estimates the position of the work vehicle **100** by using the data output from the LiDAR sensors **140** or the cameras **120.** During self-driving, the ECU **184** performs computation necessary for the work vehicle **100** to travel along a target path, based on the estimated position of the work vehicle **100.** The ECU **184** is configured or programmed to send the ECU **181** a command to change the speed, and send the ECU **182** a command to change the steering angle. In response to the command to change the speed, the ECU **181** is configured or programmed to control the prime mover **102,** the transmission **103,** or the brakes to change the speed of the work vehicle **100.** In response to the command to change the steering angle, the ECU **182** is configured or programmed to control the steering device **106** to change the steering angle.

Through the actions of these ECUs, the controller **180** is configured or programmed to realize self-traveling. During self-traveling, the controller **180** is configured or programmed to control the driver **240** based on the measured or estimated position of the work vehicle **100** and on the consecutively-generated target path. As a result, the controller **180** can cause the work vehicle **100** to travel along the target path.

The plurality of ECUs included in the controller **180** can communicate with one another in accordance with a vehicle bus standard such as, for example, a CAN (Controller Area Network). Instead of a CAN, faster communication methods such as Automotive Ethernet (registered trademark) may be used. Although the ECUs **181** to **184** are illustrated as individual blocks in FIG. **2****,** the function of each of the ECU **181** to **184** may be implemented by a plurality of ECUs. Alternatively, an onboard computer that integrates the functions of at least some of the ECUs **181** to **184** may be provided. The controller **180** may include ECUs other than the ECUs **181** to **184,** and any number of ECUs may be provided in accordance with functionality. Each ECU includes a processing circuit including one or more processors.

The cameras **120** may be provided at the front/rear/right/left of the work vehicle **100,** for example. The cameras **120** image the surrounding environment of the work vehicle **100** and generate image data. The images acquired with the cameras **120** may be transmitted to the terminal device, which is responsible for remote monitoring, for example. The images may be used to monitor the work vehicle **100** during unmanned driving. The cameras **120** may be provided according to the needs, and any number of them may be provided.

The LiDAR sensors **140** are one example of external sensors that output sensor data indicating a distribution of geographic features around the work vehicle **100.** In the example of FIG. **1****,** two LiDAR sensors **140** are located on the cabin **105,** at the front and the rear. The LiDAR sensors **140** may be provided at other positions (e.g., on a lower portion of a front face of the vehicle body **101**). While the work vehicle **100** is traveling, each LiDAR sensor **140** repeatedly outputs sensor data representing the distances and directions of measurement points on objects existing in the surrounding environment, or two-dimensional or three-dimensional coordinate values of such measurement points. The number of LiDAR sensors **140** is not limited to two, but may be one, or three or more.

The LiDAR sensors **140** may be configured to output two-dimensional or three-dimensional point cloud data as sensor data. In the present specification, "point cloud data" broadly means data indicating a distribution of multiple reflection points that are observed with the LiDAR sensors **140.** The point cloud data may include coordinate values of each reflection point in a two-dimensional space or a three-dimensional space or information indicating the distance and direction of each reflection point, for example. The point cloud data may include information of luminance of each reflection point. The LiDAR sensors **140** may be configured to repeatedly output point cloud data with a pre-designated cycle, for example. Thus, the external sensors may include one or more LiDAR sensors **140** that output point cloud data as sensor data.

The sensor data that is output from the LiDAR sensors **140** is processed by a controller configured or programmed to control self-traveling of the work vehicle **100.** During travel of the work vehicle **100,** based on the sensor data that is output from the LiDAR sensors **140,** the controller can consecutively generate an obstacle map indicating a distribution of objects existing around the work vehicle **100.** The controller may be configured or programmed to generate an environment map by joining together obstacle maps with the use of an algorithm such as SLAM, for example, during self-traveling. The controller can be configured or programmed to perform estimation of the position and orientation of the work vehicle **100** (i.e., localization) by matching the sensor data against the environment map.

The plurality of obstacle sensors **130** shown in FIG. **1** are provided at the front and the rear of the cabin **105.** The obstacle sensors **130** may be located at other positions. For example, one or more obstacle sensors **130** may be located at any position at the sides, the front, or the rear of the vehicle body **101.** The obstacle sensors **130** may include, for example, laser scanners or ultrasonic sonars. The obstacle sensors **130** may be used to detect obstacles in the surroundings during self-traveling to cause the work vehicle **100** to halt or detour around the obstacles.

The controller of the work vehicle **100** may be configured or programmed to utilize, for positioning, the sensor data acquired with the sensing devices such as the cameras **120** or the LIDAR sensors **140,** in addition to the results of positioning provided by the positioning device **110.** In the case where geographic features serving as characteristic points exist in the environment that is traveled by the work vehicle **100,** as in the case of an agricultural road, a forest road, a general road, or an orchard, the position and the orientation of the work vehicle **100** can be estimated with a high accuracy based on data that is acquired with the cameras **120** or the LiDAR sensors **140** and on an environment map that is previously stored in the storage device. By correcting or complementing position data based on the satellite signals using the data acquired with the cameras **120** or the LiDAR sensors **140,** it becomes possible to identify the position of the work vehicle **100** with a higher accuracy.

The work vehicle **100** and the implement **300** can communicate with each other via a communication cable that is included in the linkage device **108.** The work vehicle **100** is able to communicate with a terminal device **400** for remote monitoring via a network **80.** The terminal device **400** may be any arbitrary computer, e.g., a personal computer (PC), a laptop computer, a tablet computer, or a smartphone, for example.

The implement **300** includes a driver **340** (which may be referred to as the "second driver"), a driver **340,** a controller **380,** and a communicator **390.** Note that FIG. **2** shows component elements which are relatively closely related to the operations of self-driving by the work vehicle **100,** while other components are omitted from illustration.

The cameras **120** are imagers that image the surrounding environment of the work vehicle **100.** Each camera **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the work vehicle **100,** the cameras **120** image the surrounding environment of the work vehicle **100,** and generate image (e.g., motion picture) data. The cameras **120** are able to capture motion pictures at a frame rate of 3 frames/second (fps: frames per second) or greater, for example. The images generated by the cameras **120** may be used by a remote supervisor to check the surrounding environment of the work vehicle **100** with the terminal device **400,** for example. The images generated by the cameras **120** may also be used for the purpose of positioning or detection of obstacles. As shown in FIG. **1****,** the plurality of cameras **120** may be provided at different positions on the work vehicle **100,** or a single camera **120** may be provided. A visible camera(s) to generate visible images and an infrared camera(s) to generate infrared images may be separately provided. Both of a visible camera(s) and an infrared camera(s) may be provided as a camera(s) for generating images for monitoring purposes. The infrared camera(s) may also be used for detection of obstacles at nighttime.

An obstacle sensor **130** detects objects around the work vehicle **100.** The obstacle sensor **130** may include a laser scanner or an ultrasonic sonar, for example. When an object exists at a position closer to the obstacle sensor **130** than a predetermined distance, the obstacle sensor **130** outputs a signal indicating the presence of an obstacle. A plurality of obstacle sensors **130** may be provided at different positions of the work vehicle **100.** For example, a plurality of laser scanners and a plurality of ultrasonic sonars may be located at different positions of the work vehicle **100.** Providing a multitude of obstacle sensors **130** can reduce blind spots in monitoring obstacles around the work vehicle **100.**

The driver **240** includes various types of devices required to cause the work vehicle **100** to travel and to drive the implement **300,** for example, the prime mover **102,** the transmission **103,** the steering device **106,** the linkage device **108** and the like described above. The prime mover **102** may include an internal combustion engine such as, for example, a diesel engine. The driver **240** may include an electric motor for traction instead of, or in addition to, the internal combustion engine.

The communicator **190** is a device including a circuit to communicate with the implement **300** and the terminal device **400.** The communicator **190** includes circuitry to perform exchanges of signals complying with an ISOBUS standard such as ISOBUS-TIM, for example, between itself and the communicator **390** of the implement **300.** This allows the implement **300** to perform a desired operation, or allows information to be acquired from the implement **300.** The communicator **190** may further include an antenna and a communication circuit to exchange signals via the network **80** with the terminal device **400.** The network **80** may include a 3G, 4G, 5G, or any other cellular mobile communications network and the Internet, for example. The communicator **190** may have a function of communicating with a mobile terminal that is used by a supervisor who is situated near the work vehicle **100.** With such a mobile terminal, communication may be performed based on any arbitrary wireless communication standard, e.g., Wi-Fi (registered trademark), 3G, 4G, 5G or any other cellular mobile communication standard, or Bluetooth (registered trademark).

The operation terminal **200** is a terminal for the user to perform a manipulation related to the travel of the work vehicle **100** and the operation of the implement **300,** and is also referred to as a virtual terminal (VT). The operation terminal **200** may include a display device such as a touch screen panel, and/or one or more buttons. The display device may be a display such as a liquid crystal display or an organic light-emitting diode (OLED) display, for example. By manipulating the operation terminal **200,** the user can perform various manipulations, such as, for example, switching ON/OFF the self-driving mode, switching ON/OFF a recording (teaching) mode and a reproducing (playback) mode as will be described below/, and switching ON/OFF the implement **300.** At least some of these manipulations may also be realized by manipulating the operation switches **210.** The operation terminal **200** may be configured so as to be detachable from the work vehicle **100.** A user who is at a remote place from the work vehicle **100** may manipulate the detached operation terminal **200** to control the operation of the work vehicle **100.** The operation terminal **200** may include a storage device. In place of the storage device **170,** the storage device in the operation terminal **200** may store various data that is necessary for the operation of the work vehicle **100.**

The driver **340** in the implement **300** shown in FIG. **2** performs necessary operations for the implement **300** to perform predetermined tasks. The driver **340** includes a device that is adapted to the use of the implement **300,** e.g., a hydraulic device, an electric motor, or a pump. The controller **380** is configured or programmed to control the operation of the driver **340.** In response to signals that are transmitted from the work vehicle **100** via the communicator **390,** the controller **380** is configured or programmed to cause the driver **340** to perform various operations. Moreover, a signal that is in accordance with the state of the implement **300** may be transmitted from the communicator **390** to the work vehicle **100.**

A travel control system according to an example embodiment of the present invention will be described. The travel control system according to the present example embodiment of the present invention is applicable to the above-described work vehicle **100,** for example. Although the examples of FIG. **1** and FIG. **2** illustrate the implement **300** as being linked to the work vehicle **100,** it is not essentially required for the implement **300** to be linked to the work vehicle **100.** In other words, the travel control system according to the present example embodiment of the present invention is applicable also to the work vehicle **100** without the implement **300** linked thereto.

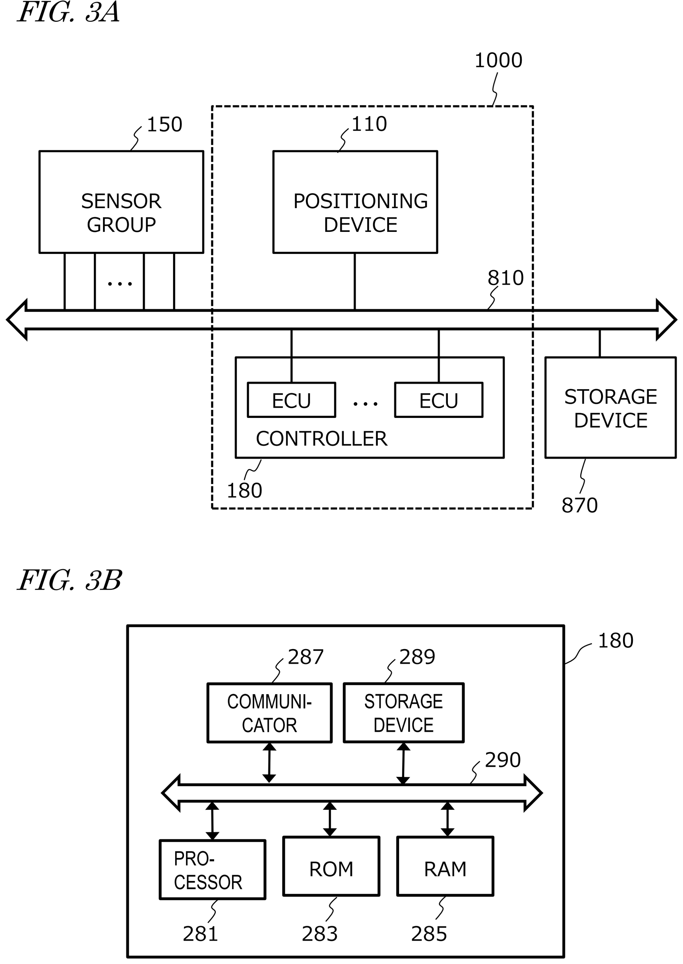

FIG. **3A** is a block diagram showing a schematic example configuration for the travel control system **1000** according to the present example embodiment of the present invention. As shown in FIG. **3A****,** the travel control system **1000** according to the present example embodiment includes a positioning device **110** to detect the position of the work vehicle **100** and output position data, and a controller **180** to control the operation of the work vehicle **100.** In the present example embodiment, as shown in FIG. **2****,** the positioning device **110** and the controller **180** are provided in the work vehicle **100.** Working in cooperation with the positioning device **110,** the controller **180** functions as the travel control system **1000** of the work vehicle **100.** The controller **180** and the positioning device **110** may be communicably connected to one another via the bus **810.**

FIG. **3A** together shows one or more internal sensors (sensor group) **150** to output sensor data concerning the state of the work vehicle **100.** The sensor group **150** may be included as portion of the travel control system **1000,** or be external elements to the travel control system **1000.** In the present example embodiment, as shown in FIG. **2****,** the sensor group **150** is provided in the work vehicle **100.** The sensor group **150** may be communicably connected to the controller **180** and the positioning device **110** via the bus **810.**

FIG. **3A** also shows a storage device **870,** to which information that is acquired by the controller **180** is recorded. The storage device **870** may be included in the travel control system **1000,** or be an external element to the travel control system **1000.** The storage device **870** may be mounted in the work vehicle **100,** or mounted in the implement **300.** The storage device **870** may be communicably connected to the controller **180** via the **810.** For example, the storage device **870** may be the storage device **170** shown in FIG. **2****,** or a storage device that is included in the operation terminal **200.** The operation terminal **200** may be included in the travel control system **1000.** The storage device **870** may be located outside of the work vehicle **100** and the implement **300.** When located outside of the work vehicle **100** and the implement **300,** the storage device **870** may be connected to the controller **180** via a communications network.

In the example shown in FIG. **1****,** the positioning device **110** is mounted to the work vehicle **100.** However, the positioning device **110** may be mounted to the implement **300** that is linked to the work vehicle **100.** In addition to or instead of the positioning device mounted to the work vehicle **100,** a positioning device (e.g., a GNSS unit) that is mounted to the implement **300** may function as a positioning device **110** of the travel control system **1000.** Strictly speaking, a position that is measured by a positioning device that is mounted to the work vehicle **100** or the implement **300** is the position of a point at which the positioning device exists, but this position is referred to as the "position of the work vehicle" in the present specification.

Without being limited to the steering wheel sensor **152,** the angle-of-turn sensor **154,** and the axle sensor **156** mentioned above, various sensors that are mounted in the work vehicle **100** may be included in the sensor group **150.** For example, the sensor group **150** may include one or more sensors selected from among a temperature sensor, an illuminance sensor, a fuel sensor, a water temperature sensor, an oil level gauge, an engine revolution sensor, a vehicle speed sensor, a battery voltage sensor, a shuttle sensor, a hand accelerator sensor, an accelerator pedal sensor, a main shift lever sensor, a range shift lever sensor, a seat belt sensor, a PM sensor, an acceleration sensor, an angular velocity sensor, an IMU (Inertial Measurement Unit), and a geomagnetic sensor. The sensor group **150** may include a PTO sensor to detect rotation ON/OFF of the PTO shaft and/or a 3P position sensor to detect the position in the height direction (which hereinafter may be simply referred to as "height") of the three-point hitch. Furthermore, in addition to or instead of one or more sensors mounted on the work vehicle **100,** one or more sensors that are mounted on the implement **300** may be included in the sensor group **150** of the travel control system **1000.**

In the example shown in FIG. **3A****,** the controller **180** includes a plurality of ECUs. These ECUs may include the ECUs **181** to **184** illustrated in FIG. **2****,** for example. However, the controller **180** may be a single ECU or other computer. FIG. **3B** is a block diagram showing an example configuration for such a controller **180.** In the example of FIG. **3B****,** the controller **180** includes a processor **281,** a ROM (Read Only Memory) **283,** a RAM (Random Access Memory) **285,** a communicator **287,** and a storage device **289.** These component elements may be connected to one another via a bus **290.**

The processor **281** is a semiconductor integrated circuit, also called a central processing unit (CPU) or a microprocessor. The processor **281** may include a graphics processing unit (GPU). The processor **281** consecutively executes a computer program describing predetermined instructions and being stored in the ROM **283,** and achieves processes that are necessary for the travel control system according to the present example embodiment of the present invention. The controller **180** may include a plurality of processors **281.** The plurality of processors **281** may work in cooperation to perform the processes that are necessary for the travel control system according to the present example embodiment of the present invention. A portion or an entirety of the processor **281** may be an FPGA (Field Programmable Gate Array), an ASIC (Application Specific Integrated Circuit), or an ASSP (Application Specific Standard Product) incorporating a CPU.

The communicator **287** is an interface for performing data communications between the controller **180** and an external computer. The communicator **287** is capable of wired communications via a CAN (Controller Area Network) or the like, or wireless communications compliant with the Bluetooth (registered trademark) standards and/or the Wi-Fi (registered trademark) standards.

The storage device **289** can store position data acquired from the positioning device **110,** sensor data acquired from the sensor group **150,** position data and/or sensor data in the middle of processing, data of first information acquired from the position data and second information acquired from the sensor data, and the like. The storage device **289** includes a hard disk drive or a non-volatile semiconductor memory, for example. In this example, the storage device **289** may serve as the storage device **870** in the example of FIG. **3A****.**

The hardware configuration of the controller **180** is not limited to the above example. It is not necessary for a portion or an entirety of the controller **180** to be mounted in the work vehicle **100.** By utilizing the communicator **287,** a computer or computers located outside the work vehicle **100** may be allowed to function as a portion or an entirety of the controller **180.** For example, a computer or computers included in a server computer(s) and/or a terminal device(s) that is connected to a network may function as a portion or an entirety of the controller **180.** On the other hand, a computer or computers that is mounted in the work vehicle **100** may perform all functions required of the controller **180.**

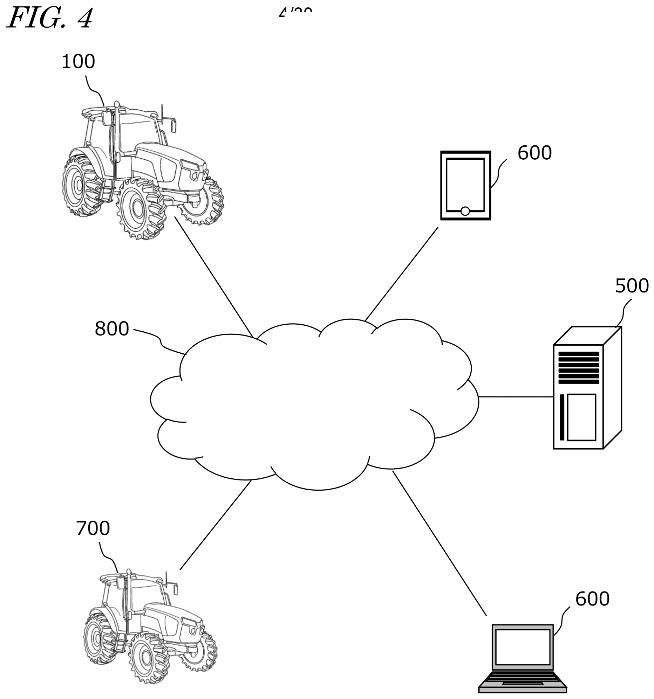

FIG. **4** is a schematic diagram showing another example configuration for a travel control system according to an example embodiment of the present invention. The system shown in FIG. **4** includes the work vehicle **100,** another work vehicle **700,** a server computer **500,** and a plurality of terminal devices **600.** The terminal devices **600** may be either mobile or stationary terminal devices. A portion or an entirety of the functionality of the controller **180** shown in FIG. **3B** may be realized by one or more computers that are connected to the communicator **287** of the controller **180** of the work vehicle **100** via a communications network **800.** Such a computer(s) may be the server computer **500** or the terminal device(s) **600.** This communications network **800** may have the other work vehicle (e.g., agricultural machine) **700** connected thereto. Communication may be performed between the controller **180** of the work vehicle **100** and the other work vehicle **700.** Via the communications network **800,** a portion of the data to be used for the processing by the controller **180** of the work vehicle **100** may be supplied from the other work vehicle **700** to the controller **180.** For example, waypoint data defining a path and a series of operations as generated by the controller of the other work vehicle **700** may be transmitted from the other work vehicle **700** to the controller **180** of the work vehicle **100.** Based on the waypoint data, the controller **180** can perform a playback operation in a reproducing mode as will be described below.

As shown in FIG. **3B****,** an example of the "controller" in an example embodiment of the present invention is a computer that includes at least one processor and at least one memory storing a computer program (code) defining control processes to be executed by the processor. The "controller" may be a computer equipped with an FPGA (Field-Programmable Gate Array), an ASSP (Application Specific Standard Product), an ASIC (Application-Specific Integrated Circuit), or other hardware accelerators configured to execute the control processes.

A "processor" in an example embodiment of the present invention is a hardware electronic circuit such as a CPU (Central Processing Unit), a GPU (Graphics Processing Unit), a DSP (Digital Signal Processor), an ISP (Image Signal Processor), or an NPU (Neural Network Processing Unit). A "memory" is a hardware electronic circuit such as a ROM (Read Only Memory) or a RAM (Random Access Memory). A portion of the memory may be a storage medium that is connected to the processor via interconnects or a network. These hardware electronic circuits may be implemented by one or more integrated circuits (IC) or large-scale integrated circuits (LSI). Each functional unit or block and its associated components within the electronic circuit may be individually manufactured as an individual integrated circuit chip, or a portion or an entirety of these functional units or blocks may be combined so as to be manufactured as a single integrated circuit chip.

A program defining the operation of a processor is designed so that the processor will execute one or more functions, manipulations, steps, or process according to an example embodiment of the present invention.

As will be described below, the travel control system **1000** is capable of controlling the operation of the work vehicle **100** by using a so-called teaching-playback method, which is used in the fields of robot control. The controller **180** of the travel control system **1000** can operate in a recording mode and a reproducing mode. The recording mode is a mode in which multiple positions (hereinafter also referred to as "waypoints") defining a travel path of the work vehicle **100** are recorded. In the recording mode, operations of the work vehicle **100** at the respective waypoints may further be recorded. The reproducing mode is a mode in which the travel path of the work vehicle **100** as recorded in the recording mode is reproduced. If operations of the work vehicle **100** at the respective waypoints were recorded in the recording mode, the operations of the work vehicle **100** at the respective waypoints may also be reproduced in the reproducing mode. The operations in the recording mode and the reproducing mode correspond to, respectively, an operation of teaching and an operation of playback in the teaching-playback method. The operations of the controller **180** in the recording mode and the reproducing mode may be referred to as "teaching" and "playback", respectively. The recording mode may be referred to as the "teaching mode", and the reproducing mode as the "playback mode".

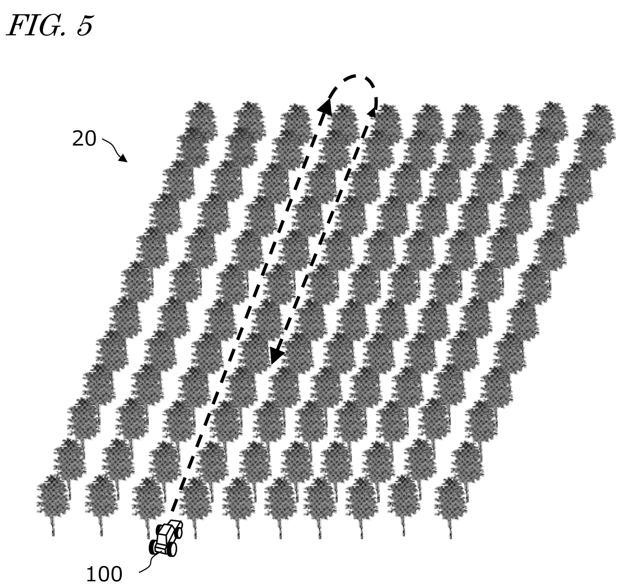

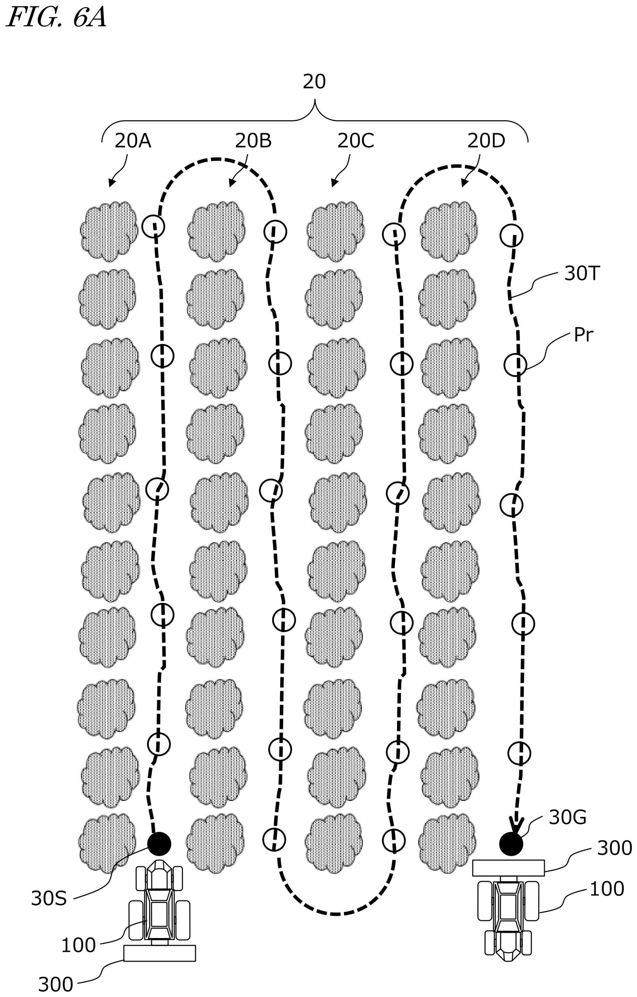

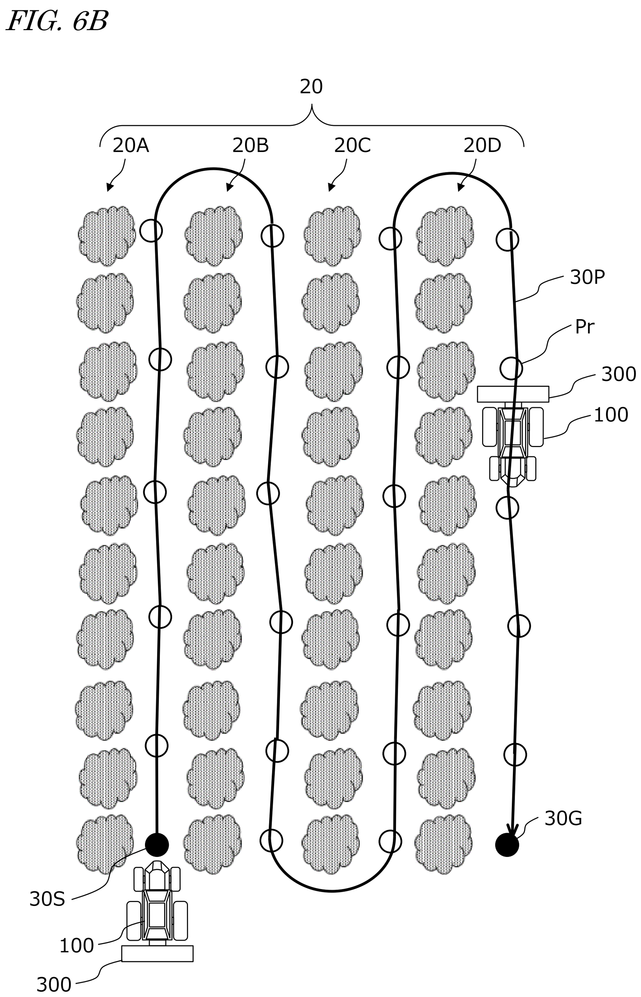

With reference to FIG. **5****,** FIG. **6A** and FIG. **6B****,** operations of the controller **180** of the travel control system **1000** in the recording mode and the reproducing mode will be described. FIG. **5** is a diagram schematically showing an example of an environment in which the work vehicle **100** travels. FIG. **6A** is a diagram schematically showing an example of a path **30T** that is traveled by the work vehicle **100** in the recording mode. FIG. **6B** is a diagram schematically showing an example of a path **30P** that is traveled by the work vehicle **100** in the reproducing mode. In this example, the work vehicle **100** performs predetermined tasks (e.g., mowing, preventive pest control, seeding, manure spreading, etc.) by using the implement **300,** while traveling among the plurality of rows of trees **20** (hereinafter also referred to as "crop rows **20**") in an orchard such as a vineyard.

In the recording mode, in the example of FIG. **6A****,** the work vehicle **100** performs travel while performing work by the implement 300. In the example of FIG. **6A****,** the work vehicle **100** travels along the path **30T** from a start point **30S** to an end point **30G.** FIG. **6A** illustrates a state where the work vehicle **100** is located before the start point **30S** and a state where the work vehicle **100** is located at a point beyond the end point **30G.** In the recording mode, while the work vehicle **100** is traveling, the controller **180** records multiple pieces of waypoint data to the storage device **870,** based on position data that is output from the positioning device **110.** Each of the multiple pieces of waypoint data includes first information concerning the position of the work vehicle **100.** Each of the multiple pieces of waypoint data may further include second information concerning the state of the work vehicle **100.** In other words, in the recording mode, while the work vehicle **100** is traveling, the controller **180** may record multiple pieces of waypoint data including first information and second information to the storage device **870** respectively based on the position data that is output from the positioning device **110** and the sensor data that is output from the sensor group **150.** The first information and second information included in each piece of waypoint data indicate a position of the work vehicle **100** and the state of the work vehicle **100** at that position, respectively. Therefore, the first information may be referred to as "positional information", and the second information may be referred to as "state information". Multiple pieces of first information that are included in multiple pieces of waypoint data represent the path **30T** that has been traveled by the work vehicle 100. The multiple pieces of waypoint data may be recorded to the storage device **870** as "path data" representing the path **30T,** in association with information of the path **30T** (e.g., including an identifier indicating the path 3**0**T). Each of the multiple pieces of second information that are included in the multiple pieces of waypoint data is recorded in association with the corresponding first information. As each of the multiple pieces of second information that are included in the multiple pieces of waypoint data is recorded in association with the corresponding first information, information of the state of the work vehicle **100** at each position on the path **30T** that has been traveled by the work vehicle **100** becomes recorded. For example, as shown in FIG. **6A****,** at each of the multiple positions (waypoints) **Pr** on the path **30T** having been traveled, first information and second information are acquired and recorded as waypoint data.

In the recording mode, the work vehicle **100** may perform manual traveling via manual operation of the driver, or self-traveling via self-driving. When the work vehicle **100** performs self-traveling in the recording mode, the work vehicle **100** may autonomously travel without involving manual operation of the driver, or perform self-traveling but travel partly based on manual operation of the driver. For example, an automatic steering control may be performed during travel in the recording mode, such that the driver performs control of the traveling speed of the work vehicle **100** while steering control is automatically performed. Alternatively, during travel in the recording mode, the work vehicle **100** may perform self-traveling, while the implement **300** operates via manual operation of the driver. Manual operation of the driver includes not only manual operation of the driver on the work vehicle **100,** but also remote operation by a driver (operator) outside the work vehicle **100.** Such remote operations may be performed by using the terminal devices **600** shown in FIG. **4****,** or other remote operation devices, for example.

The second information broadly includes information concerning states of the work vehicle **100** other than its position. The second information includes information concerning operation of the work vehicle **100,** e.g., a traveling state, for example. The traveling state of the work vehicle **100** is defined by velocity, acceleration (i.e., rate of change in velocity per unit time), traveling direction (azimuth), and the like of the work vehicle **100.** Information concerning the traveling state of the work vehicle **100** includes any one or more of information of the velocity of the work vehicle **100,** information of the engine speed of the work vehicle **100,** information of the acceleration of the work vehicle **100,** information of the azimuth of the work vehicle **100,** information of the steering angle of the wheels responsible for steering of the work vehicle **100,** information of the gear ratio of the transmission **103** of the work vehicle **100,** and the like, for example. The second information may include information of the attitude of the work vehicle **100.** Information of the attitude of the work vehicle **100** includes information of the azimuth of the work vehicle **100,** for example. Without being limited to information concerning the operation of the work vehicle **100,** the second information may include information of the temperature of the work vehicle **100** (e.g., temperature of the engine coolant), information concerning the presence/absence of problems of the work vehicle **100** (e.g., Diagnostic Trouble Code: DTC), and the like, for example. Specific examples of methods of acquiring the second information will be described later.

The second information may include information concerning the state of the linkage device **108** for enabling linking of the implement **300.** The linkage device **108** may include the PTO shaft for supplying motive power to the implement **300** and a three-point hitch for adjusting the height of the implement **300,** for example. Information concerning the state of the linkage device **108** may include any one or more of information of rotation ON or OFF of the PTO shaft, and information of the height of the three-point hitch, for example.

In a case where the work vehicle **100** has the implement **300** linked thereto, the second information may include, in addition to information concerning the state of the work vehicle **100,** information concerning the state of the implement **300.** For example, in a case where the implement **300** has a positioning device mounted thereto, information of the position or azimuth (e.g., angle with respect to a reference azimuth) of the implement **300** may be included in the second information. Alternatively, in a case where a sensor to detect the operation of a movable structure in the implement **300** is provided in the implement **300,** information that is detected by that sensor may be included in the second information.

In the reproducing mode, the work vehicle **100** performs travel via self-driving. While causing the work vehicle **100** to perform self-traveling based on the first information included in multiple pieces of waypoint data recorded in the recording mode, the controller **180** is configured or programmed to control the operation of the work vehicle **100.** In a case where each of the multiple pieces of waypoint data includes second information concerning the state of the work vehicle **100,** the controller **180** is configured or programmed to control the operation of the work vehicle **100** while causing the work vehicle **100** to perform self-traveling based on the first information and second information included in the multiple pieces of waypoint data recorded in the recording mode. In the example of FIG. **6B****,** based on the first information (positional information) and the second information (state information) included in the multiple pieces of waypoint data recorded when traveling along the path **30T** (see FIG. **6A**) in the recording mode, the work vehicle **100** performs self-traveling. In the reproducing mode, the controller **180** causes the work vehicle **100** to travel along a target path **30P** that is defined by the first information included in the multiple pieces of waypoint data recorded in the recording mode. For example, the controller **180** is configured or programmed to perform steering control for the work vehicle **100** so as to minimize deviations of the position and orientation (azimuth) of the work vehicle **100** with respect to the target path **30P.** This allows the work vehicle **100** to travel along the target path **30P.** In the reproducing mode, the work vehicle **100** is able to automatically reproduce the operation of the work vehicle **100** that was recorded in the recording mode.

The reproducing mode is begun in a state where the work vehicle **100** is located at the start point **30S** of the target path **30P,** for example. The reproducing mode may be begun in a state where the work vehicle **100** is located at any point midway the target path **30P** (i.e., anywhere between the start point **30S** and the end point **30G**). As the work vehicle **100** reaches the end point **30G** of the target path **30P,** for example, the controller **180** ends the reproducing mode. Without being limited thereto, even when the work vehicle **100** is located at any point midway the target path **30P,** the controller **180** may end self-driving under the reproducing mode upon receiving a signal including an instruction to end the reproducing mode, for example. FIG. **6B** illustrates a state where the work vehicle **100** is located before the start point **30S** and a state where the work vehicle **100** is located somewhere along the path **30P.**

As in the examples of FIG. **6A** and FIG. **6B****,** in a case where the work vehicle **100** has the implement **300** linked thereto, based on the first information (or, the first information and second information) included in multiple pieces of waypoint data recorded in the recording mode, the controller **180** can control the operations of the work vehicle **100** and the implement **300,** while causing the work vehicle **100** to perform self-traveling. In other words, in the reproducing mode, the work vehicle **100** can automatically reproduce not only the operation of the work vehicle **100** that was recorded in the recording mode, but also the operation of the implement **300.**

With the travel control system according to the present example embodiment, in the reproducing mode, it is possible to reproduce the operation of the work vehicle **100** based on the first information concerning the position of the work vehicle **100** as recorded in the recording mode. As a result, iterative operations of the work vehicle **100** can be efficiently performed. Thus, automation and unmanned execution of the operation of the work vehicle **100** are promoted. In a case where second information concerning the state of the work vehicle **100** other than its position is recorded in association with the first information concerning the position of the work vehicle **100** in the recording mode, automation and unmanned execution of the operation of the work vehicle **100** is further promoted.

In a case where the work vehicle **100** has the implement **300** linked thereto, in the reproducing mode, the operation of the work vehicle **100** having the implement **300** linked thereto can be reproduced based on the first information recorded in the recording mode. As a result, iterative operations of the implement **300** having the implement **300** linked thereto can be efficiently carried out. For example, in the recording mode, second information concerning the state of the implement **300** may be recorded in association with the first information concerning the position of the work vehicle **100,** thus promoting automation and unmanned execution of the work by the implement **300.** In other words, the work vehicle **100** can automatically reproduce not only the operation of the work vehicle **100** that was recorded in the recording mode, but also the operation of the implement **300.** As a result, iterative work to be performed by the implement **300** can be efficiently carried out.

In the examples of FIG. **6A** and FIG. **6B****,** the work vehicle **100** travels along the path **30T** or the path **30P** among the plurality of rows of trees **20.** More specifically, the work vehicle 100 travels between two adjacent rows of trees 20, and turns in a headland before and after the travel between the two adjacent rows of trees 20. A headland is a region between an end of each row of trees and the boundary of the orchard. Specifically, the following operation may be performed. Let the plurality of rows of trees 20 be sequentially designated as a first row of trees 20A, a second row of trees 20B, a third row of trees 20C, a fourth row of trees 20D,..., from the end. From the start point 30S, the work vehicle 100 first travels between the first row of trees 20A and the second row of trees 20B, and upon completing this travel, turns right to travel between the second row of trees 20B and the third row of trees 20C in the opposite direction. Once the travel between the second row of trees 20B and the third row of trees 20C is completed, it further turns left to travel between the third row of trees **20C** and the fourth row of trees **20D.** Thereafter, by repeating a similar operation, the work vehicle **100** travels to the end point **30G** of the path **30T** or the path **30P.**

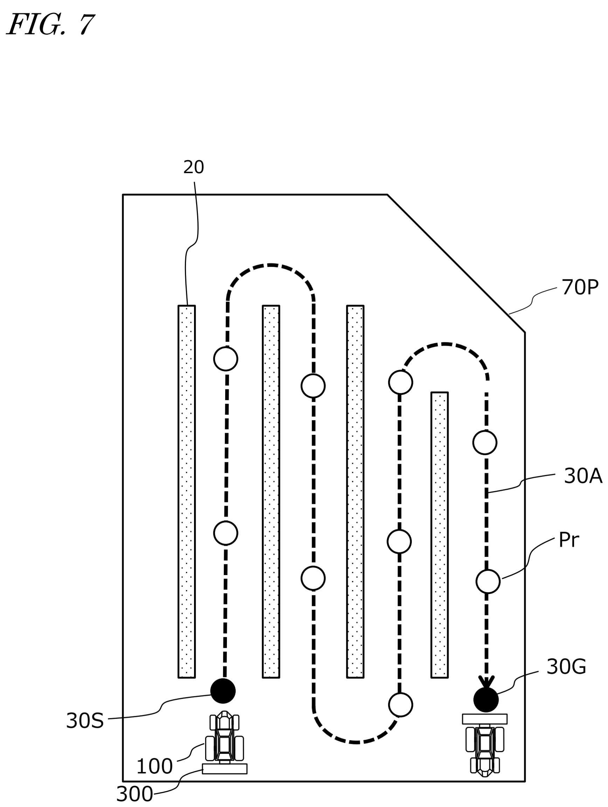

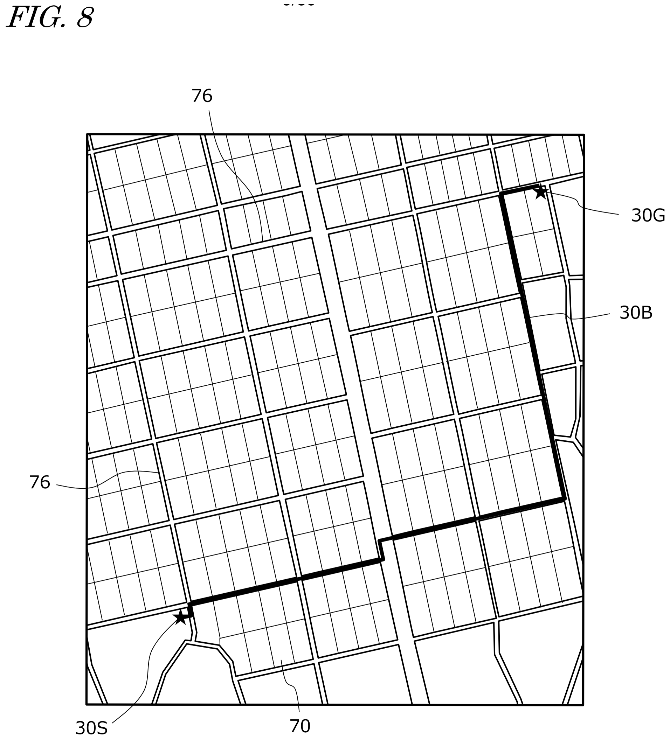

FIG. **7** and FIG. **8** are diagrams schematically showing other examples of paths that are traveled by the work vehicle **100.**

FIG. **7** shows, in a non-rectangular field **70P,** a path **30A** along which the work vehicle **100** travels among a plurality of crop rows **20.** In the recording mode, the work vehicle **100** travels along the path **30A** from a start point **30S** to an end point **30G.** In the reproducing mode, the controller **180** causes the work vehicle **100** to perform self-traveling along a target path that is defined by the first information included in multiple pieces of waypoint data recorded in the recording mode. As shown in FIG. **7****,** autonomous travel may not be easy in a non-rectangular field because the crop rows **20** may differ from one another in length. By using the travel control system according to the present example embodiment, iterative operations of the work vehicle **100** can be efficiently performed even in a non-rectangular field, thus promoting automation and unmanned execution of the operation of the work vehicle **100.**

FIG. **8** shows a path **30B** along which the work vehicle **100** travels, outside the fields **70.** The region depicted in FIG. **8** includes a number of fields **70** where the work vehicle **100** performs agricultural work, and roads **76** around the fields. The roads **76** may be agricultural roads. In the recording mode, the work vehicle **100** travels along the path **30B** from a start point **30S** to an end point **30G.** In the reproducing mode, the controller **180** causes the work vehicle **100** to perform self-traveling along a target path that is defined by the first information included in multiple pieces of waypoint data recorded in the recording mode. As shown in FIG. **8****,** the travel control system according to the present example embodiment is also applicable to travel that is performed outside the fields. For example, it is suitably applicable to any manner of travel that is performed iteratively, e.g., movements of the work vehicle **100** from field to field or movements of the work vehicle **100** between its storage location and a field. In such a case, iterative operations of the work vehicle **100** (which herein is movements) can be efficiently performed, thus promoting automation and unmanned execution of the operation of the work vehicle **100** (which herein is movements).

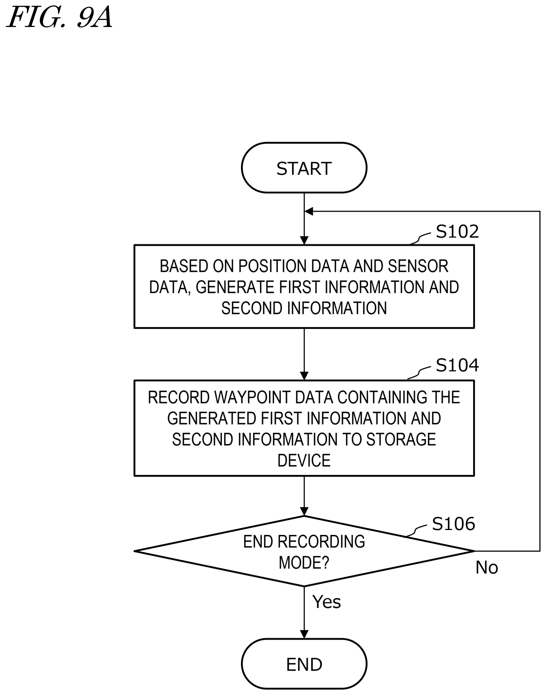

FIG. **9A** is a flowchart showing an example processing to be performed in the recording mode.

The timing of beginning the recording mode is designated by the user, for example. For instance, the controller **180** may begin the recording mode when a signal including an instruction to begin the recording mode is transmitted to the controller **180** through a manipulation of the driver. For instance, the driver on the work vehicle **100** can transmit a signal including an instruction to begin the recording mode to the controller **180** by manipulating an input device such as the operation terminal **200** or a predetermined operation switch provided in the work vehicle **100.** The recording mode may be begun during travel of the work vehicle **100,** or begun while the work vehicle **100** is at a halt.

Once the recording mode is begun, then at step **S102,** while the work vehicle **100** is traveling, the controller **180** is configured or programmed to generate first information and second information based on position data that is output from the positioning device **110** and sensor data that is output from the sensor group **150.** For example, the controller **180** may be configured or programmed to calculate the position (i.e., coordinates) of a reference point on the work vehicle **100** based on position data that is output from the positioning device **110,** and generate (acquire) information indicating this position as the first information. Based on the position data that is output from the positioning device **110** and information indicating a relative position relationship between the positioning device **110** and the work vehicle **100** that is recorded in the storage device in advance, the controller **180** can be configured or programmed to calculate the position of the reference point on the work vehicle **100.** Moreover, as the second information, the controller **180** may be configured or programmed to generate, based on sensor data that is output from the sensor group **150,** information that is necessary to control various actuators to be driven during playback.

The first information and second information may be generated at any arbitrary timing. The first information and second information may be generated each time the work vehicle **100** travels a certain distance, or each time a certain period passes, for example. The aforementioned certain distance (e.g., distance between two adjacent waypoints **Pr** along the traveling direction of the work vehicle **100** in the example of FIG. **6A****)** may be set to a value on the order of several ten centimeters (cm) to several meters (m), for example. The aforementioned certain period may be set to a value in the range from 1 second to 10 seconds, for example.

At step **S104,** the controller **180** is configured or programmed to record waypoint data including the first information and second information generated in step **S102** to the storage device **870** (see FIG. **3A****).** The first information and second information are recorded in association with each other.

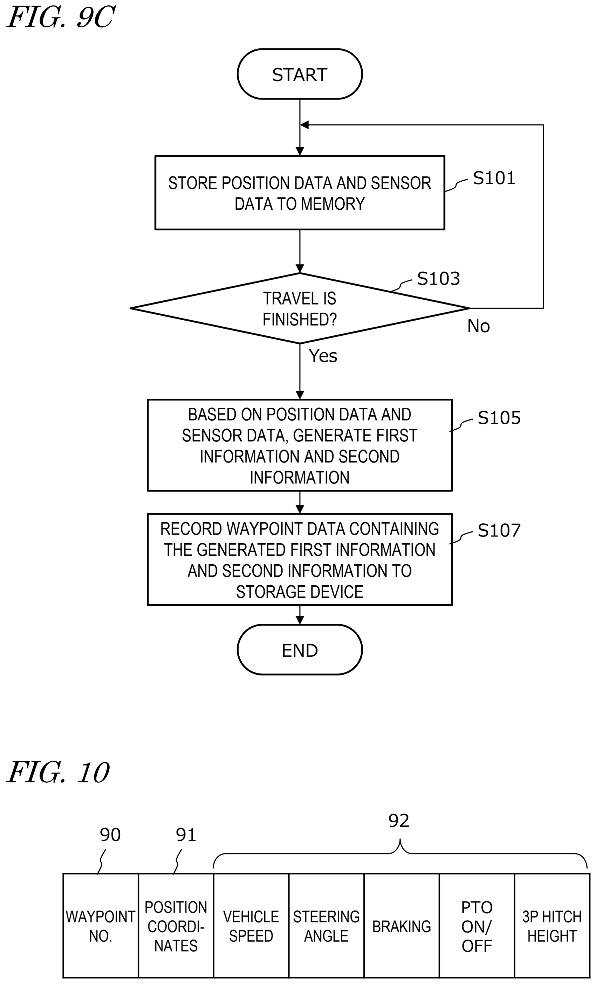

FIG. **10** is a diagram showing an example of waypoint data. The waypoint data depicted in FIG. **10** includes a waypoint number (No.) **90,** first information **91** indicating the position of the work vehicle **100,** and second information **92** indicating the state of the work vehicle **100.** The first information **91** represents the position coordinates of that waypoint. For example, the position coordinates may indicate a latitude and a longitude in a geographic coordinate system, or indicate position coordinates in a coordinate system other than a geographic coordinate system. In addition to a latitude and a longitude, the position coordinates may include altitude information. The second information **92** in the example of FIG. **10** includes information as to a vehicle speed, a steering angle, whether braking is applied or not, ON/OFF of the PTO shaft, and the height of the 3P hitch. The second information **92** may include only portion of such information. Alternatively, the second information **92** may include other information not shown in FIG. **10****.** For example, information indicating the state of a forward/reverse lever may be included in the second information **92.** Alternatively, ON/OFF information of a front wheel speed increasing function (also referred to as "bi-speed turn") may be included in the second information **92.**

Until an instruction to end the recording mode is given (step **S106),** the controller **180** repeats the processes of step **S102** and step **S104.** The timing of ending the recording mode may be designated by the user. For example, the controller **180** may end the recording mode when a signal including an instruction to end the recording mode is transmitted to the controller **180** through a manipulation of the driver. For instance, the driver on the work vehicle **100** can transmit a signal including an instruction to end the recording mode to the controller **180** by manipulating an input device such as the operation terminal **200** or a predetermined operation switch provided in the work vehicle **100.**

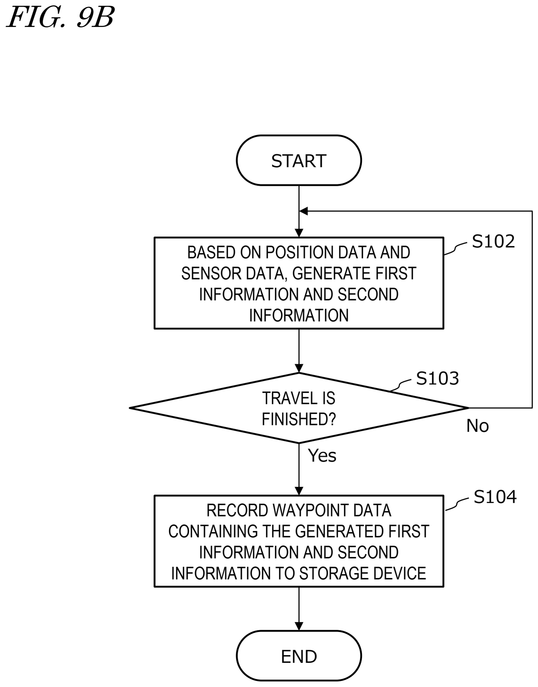

FIG. **9B** is a flowchart showing another example processing to be performed by the controller **180** in the recording mode. The flowchart of FIG. **9B** differs from the flowchart of FIG. **9A** in that step **S104** is performed at a timing that is after the travel in the recording mode is finished.

In the example shown in FIG. **9B****,** after the travel of the work vehicle **100** in the recording mode is finished (step **S103),** the controller **180** performs the process of step **S104.** At step **S104,** multiple pieces of waypoint data including the first information and second information generated during travel of the work vehicle **100** in step **S102** are recorded to the storage device **870.** The first information and second information generated in step **S102** may be temporarily stored to the storage device **870** or a storage device (e.g., a memory such as the RAM **285** shown in FIG. **3B****)** distinct from the storage device **870,** and erased after the waypoint data has been recorded. In this example, after the travel in the recording mode is finished, waypoint data as shown in FIG. **10** is generated for each waypoint, and recorded.

FIG. **9C** is a flowchart showing still another processing to be performed by the controller **180** in the recording mode. The flowchart shown in FIG. **9C** differs from the flowchart shown in FIG. **9B** in that the first information and the second information are generated after the travel in the recording mode is finished.

In the example shown in FIG. **9C****,** at step **S101,** while the work vehicle **100** is traveling, the controller **180** stores position data that is output from the positioning device **110** and sensor data that is output from the sensor group **150** to the memory (e.g., the RAM **285** shown in FIG. **3B****).** After the travel of the work vehicle **100** in the recording mode is finished (step **S103),** the controller **180** performs the processes of steps **S105** and **S107.** At step **S105,** for each of multiple waypoints, the controller **180** generates first information and second information based on the position data and sensor data stored in the memory. At step **S107,** the controller **180** records multiple pieces of waypoint data, each including first information and second information, to the storage device **870.** In this example, after the travel in the recording mode is finished, first information and second information are generated for each waypoint, and waypoint data as shown in FIG. **10** is recorded for each waypoint.

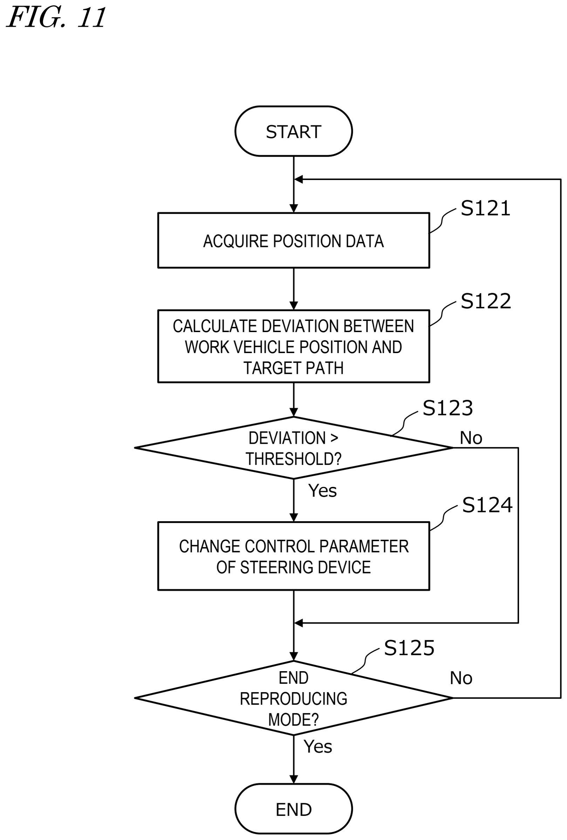

FIG. **11** is a flowchart showing an example processing to be performed in the reproducing mode.

In the reproducing mode, based on previously recorded waypoint data, the controller **180** causes the work vehicle **100** to automatically travel. The controller **180** acquires position data indicating the position of the work vehicle **100** that is output from the positioning device **110** (step **S121).** Next, the controller **180** calculates a deviation between the position of the work vehicle **100** and a target path (step **S122).** The target path is defined by positional information (first information) of multiple waypoints that are recorded in the recording mode. The deviation represents a distance between the position of the work vehicle **100** at that moment and the target path. The controller **180** determines whether the calculated deviation in position exceeds a previously-set threshold or not (step **S123).** If the deviation exceeds the threshold ("Yes" from step **S123),** the controller **180** changes a control parameter of the steering device **106** included in the driver **240** so that the deviation becomes smaller, thus changing the steering angle (step **S124).** If step **S123** finds that the deviation does not exceed the threshold ("No" from step **S123),** the process of step **S124** is not performed. Until receiving a signal including an instruction to end the reproducing mode (step **S125),** the controller **180** repeats the operation from step **S121** to step **S124.**

In the reproducing mode, by performing the process shown in FIG. **11****,** for example, the controller **180** causes the work vehicle **100** to perform self-traveling along the target path. Furthermore, based on the state information (second information) corresponding to each of the multiple waypoints defining the target path, the controller **180** may control the operation of the work vehicle **100.** For example, if the second information includes information of the steering angle of the wheels responsible for steering of the work vehicle **100,** in addition to the processing shown in FIG. **11****,** a control of the steering of the work vehicle **100** may be performed based on the steering angle included in the second information. If the second information includes information of the speed of the work vehicle **100,** the speed of the work vehicle **100** is controlled based on the information of speed included in the second information. Further alternatively, if an operation has been recorded such that rotation of the PTO shaft is stopped (OFF) before beginning a turn and rotation of the PTO shaft is started (ON) after completion of the turn, then the controller **180** reproduces that operation at a turn of the work vehicle **100** in the reproducing mode.

For the steering control and speed control of the work vehicle **100,** control techniques such as PID control or MPC control (model predictive control) may applied. By applying such control techniques, the control of bringing the work vehicle **100** closer to a target path and a target speed can be made smooth.

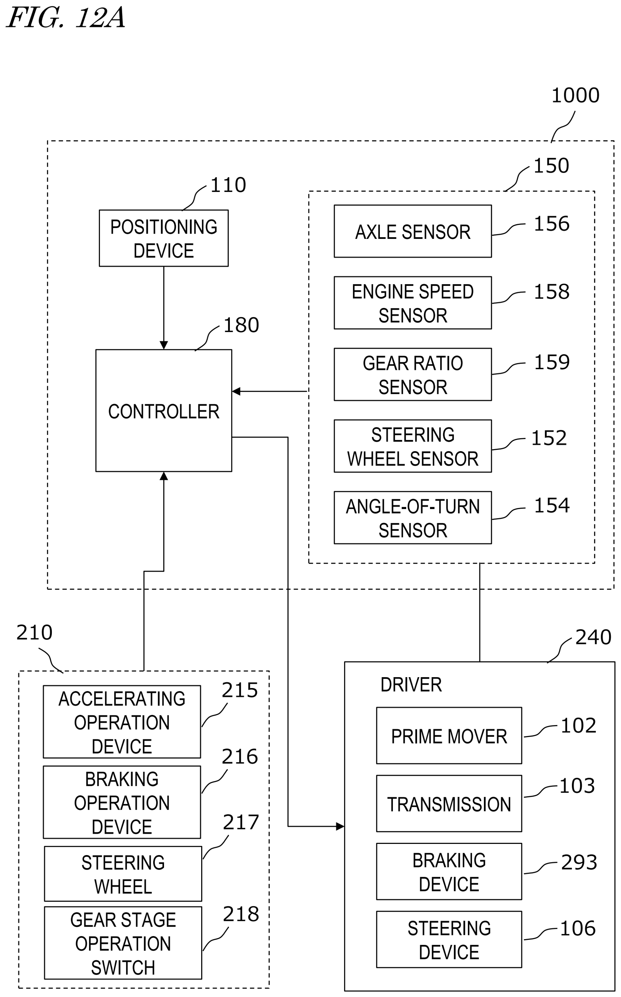

With reference to FIG. **12A****,** an example processing to be performed by the controller **180** in a case where the second information includes information concerning the traveling state of the work vehicle **100** will be described. FIG. **12A** is a schematic diagram for describing an example processing to be performed by the controller **180** of the travel control system **1000.** In addition to the travel control system **1000,** FIG. **12A** also shows the driver **240** and the operation switches **210.** For simplicity, some component elements are omitted from illustration in FIG. **12A****.**

By controlling the prime mover **102,** the braking device (brakes) **293,** and the transmission **103** included in the driver **240,** the controller 180 is configured or programmed to control the speed of the work vehicle **100.** The braking device **293** applies braking to the axle that rotates the wheels **104** of the work vehicle **100.** Specifically, by controlling the engine speed of the prime mover (engine) **102** and/or the gear ratio of the transmission **103,** the speed of the work vehicle **100** can be controlled. For example, the transmission **103** has multiple gear stages, and the controller 180 is configured or programmed to control the gear ratio of the transmission **103** by switching the gear stages of the transmission **103.** The multiple gear stages of the transmission **103** may be configured by a combination of multiple main gear stages and multiple range gear stages. When the work vehicle **100** is performing manual traveling, the controller 180 is configured or programmed to control the speed of the work vehicle **100** by controlling the prime mover **102,** the braking device (brakes) **293,** and the transmission **103** in response to the driver's manipulation of an accelerating operation device **215** (e.g., an accelerator lever or an accelerator pedal), a braking operation device **216** (e.g., a brake pedal), and/or a gear stage operation switch **218** (e.g., a shift lever). The gear stage operation switch **218** is a switch for selecting a gear stage of the transmission **103.** The controller **180** may further switch between a two-wheel drive mode and a four-wheel drive mode in response to the driver's manipulation.

In the recording mode, the controller **180** consecutively acquires sensor data that is output from vehicle speed sensors such as the axle sensor **156,** an engine speed sensor **158,** and a gear ratio sensor **159** that detects information of the gear ratio of the transmission **103.** Based on such sensor data, as second information, the controller **180** generates and records information of the speed of the work vehicle **100,** information of the engine speed of the work vehicle **100,** and information of the gear ratio of the transmission **103,** in association with the positional information (first information) of each waypoint. In such a case, in the reproducing mode, the controller 180 is configured or programmed to control the speed of the work vehicle **100** by controlling the prime mover **102,** the transmission **103,** and the braking device **293** included in the driver **240** based on the second information that was recorded in the recording mode. The gear ratio sensor **159** may be a sensor which is provided on a rotation axis within the transmission **103** and which detects the gear ratio, or a shift position sensor that detects the position of the shift lever (gear stage operation switch **218)** for selecting a gear stage to identify the selected gear stage. Without being limited to information that indicates the gear ratio itself, information of the gear ratio of the transmission **103** may be information that identifies a selected gear stage among the plurality of gear stages of the transmission **103,** for example. Since one gear stage corresponds to one gear ratio, identifying a gear stage allows the gear ratio to be identified.

The work vehicle **100** may have a bi-speed turn mode (front wheel speed increasing function). A bi-speed turn is an operation in which, when a driver steers the steering wheel so much that the steering angle of the front wheels exceeds a threshold, the speed of the front wheels is increased. Performing a bi-speed turn allows the turning radius to be decreased, thus resulting in a smoother turn. The work vehicle **100** may include a solenoid (referred to as a "bi-speed solenoid") to drive a clutch that switches the bi-speed turn mode ON/OFF. The controller **180** can switch the bi-speed solenoid ON/OFF via a hydraulic circuit. When the bi-speed solenoid is ON, the rotational speed of the front wheels is about twice that of the case where the bi-speed solenoid is OFF.

The second information may further include information concerning the traveling mode of the work vehicle **100.** For example, information concerning the traveling mode of the work vehicle **100** may include information as to forward travel or backward travel. Information concerning the traveling mode may include information as to whether the traveling mode of the work vehicle **100** is in a four-wheel drive mode or a two-wheel drive mode. Information concerning the traveling mode may include information as to whether the bi-speed turn mode is ON or OFF. Information concerning the traveling mode may further include information as to whether an automatic single brake mode is ON or OFF. The automatic single brake mode is a mode which, when ON, applies slight braking to the inner rear wheels when the steering angle of the front wheels **104F** (which are the wheels responsible for steering) exceeds a predetermined value during travel. In the reproducing mode, the controller **180** is configured or programmed to control the traveling mode of the work vehicle **100,** by controlling the prime mover **102,** the transmission **103,** and the braking device **293** included in the driver **240** based on the second information that was recorded in the recording mode.

The controller **180** changes the steering angle of the front wheels **104F** (which are the wheels responsible for steering of the work vehicle 100) by controlling the steering device **106,** and changes the azimuth of the work vehicle **100** by changing the steering angle of the wheels responsible for steering. When the work vehicle **100** is performing manual traveling, the controller **180** changes the steering angle of the wheels responsible for steering and the azimuth of the work vehicle **100** of the work vehicle **100** by controlling the steering device **106** in response to the driver's manipulation of the steering wheel 217.

In the recording mode, based on sensor data (measurement values) that is output from the steering wheel sensor **152** and/or the angle-of-turn sensor **154,** the controller **180** is configured or programmed to acquire, as second information, information of the steering angle of the wheels responsible for steering of the work vehicle 100. In such a case, in the reproducing mode, the controller **180** is configured or programmed to control steering of the work vehicle **100** by controlling the hydraulic device or the electric motor included in the steering device **106** based on the second information that was recorded in the recording mode.

The second information may further include information concerning the attitude of the work vehicle **100.** The attitude of the work vehicle **100** is represented by a roll angle θ_{R}, a pitch angle θ_{P}, and a yaw angle θ_{Y}, for example. A roll angle θ_{R} represents the amount of rotation of the work vehicle **100** around its front-rear axis. A pitch angle θ_{P} represents the amount of rotation of the work vehicle **100** around its right-left axis. A yaw angle θ_{Y} represents the amount of rotation of the work vehicle **100** around its top-bottom axis. The attitude may be defined by an Euler angle or other angles, or a quaternion. The controller **180** is configured or programmed to acquire information concerning the attitude of the work vehicle **100** based on data that is output from the IMU **115,** for example.

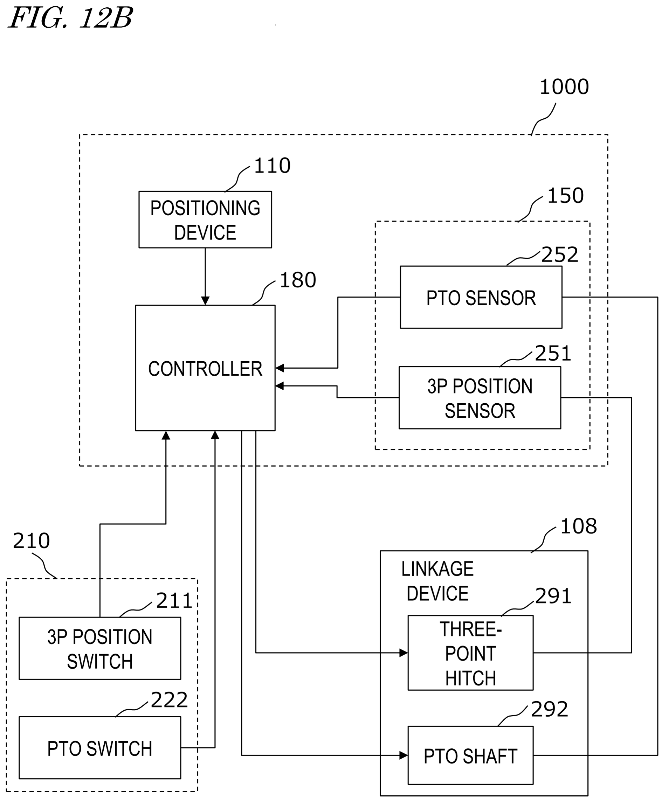

With reference to FIG. **12B****,** an example processing to be performed by the controller **180** in a case where the second information includes information concerning the state of the linkage device **108** for enabling linking of the implement **300** will be described. FIG. **12B** is a schematic diagram for describing an example processing to be performed by the controller **180** of the travel control system **1000.** In addition to the travel control system **1000,** FIG. **12B** also shows the linkage device **108** and the operation switches **210.**

As shown in FIG. **12B****,** the linkage device **108** includes a three-point hitch **291** for connecting the implement **300,** and a PTO shaft **292** for supplying motive power of rotation to the implement **300.** The operation switches **210** include a 3P position switch **211** for performing a manipulation of changing the height of the three-point hitch **291,** and a PTO switch **222** for performing a manipulation of switching ON/OFF the rotation of the PTO shaft **292.** The sensor group **150** includes a 3P position sensor **251** to detect the position in the height direction of the three-point hitch **291,** and a PTO sensor **252** to detect rotation ON/OFF of the PTO shaft **292.** Each of the linkage device **108,** the operation switches **210,** and the sensor group **150** may include other component elements, however, for simplicity, some component elements are omitted from illustration in FIG. **12B****.** The controller **180** is connected to the 3P position sensor **251,** the PTO sensor **252,** the three-point hitch **291,** and the PTO shaft **292.** The controller **180** is configured or programmed to perform communications between itself and these component elements by utilizing a communication protocol such as CAN.

The controller **180** is configured or programmed to control the height of the three-point hitch **291** and switching ON/OFF of the rotation of the PTO shaft **292.** In a case where the work vehicle **100** is operating via manual operation of the driver, the controller **180** is configured or programmed to change the height of the three-point hitch **291** in response to the driver's manipulation of the 3P position switch **211,** and switch rotation ON/OFF of the PTO shaft **292** in response to the driver's manipulation of the PTO switch **222.**

In the recording mode, based on sensor data that is output from the **3P** position sensor **251,** the controller **180** is configured or programmed to generate, as second information, information concerning the height of the three-point hitch **291.** In such a case, in the reproducing mode, the controller **180** is configured or programmed to control the height of the three-point hitch **291** based on the second information that was recorded in the recording mode. Moreover, in the recording mode, the controller **180** is configured or programmed to acquire, as second information, information concerning rotation ON/OFF of the PTO shaft **292** based on sensor data that is output from the PTO sensor **252.** In such a case, in the reproducing mode, the controller **180** is configured or programmed to control rotation ON/OFF of the PTO shaft **292** based on the second information that was recorded in the recording mode.

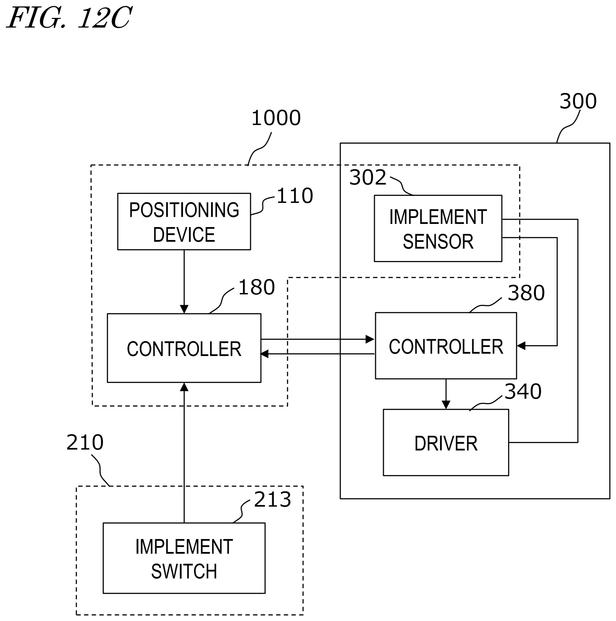

With reference to FIG. **12C****,** an example processing to be performed by the controller **180** in a case where the work vehicle **100** has the implement **300** linked thereto and the second information includes information concerning the state of the implement **300** will be described. FIG. **12C** is a schematic diagram for describing an example processing to be performed by the controller **180** of the travel control system **1000.** In addition to the travel control system **1000,** FIG. **12C** also shows the implement **300** and the operation switches **210.** For simplicity, some component elements are omitted from illustration in FIG. **12C****.**

As shown in FIG. **12C****,** the implement **300** includes the driver **340** to perform necessary operations for the implement **300** to perform predetermined tasks, the controller **380** configured or programmed to control the operation of the driver **340,** and one or more implement sensors **302** to detect the state of the driver **340** and output sensor data. The driver **340** includes a device that is adapted to the use of the implement **300,** such as a hydraulic device, an electric motor, or a pump, for example. The implement sensor **302** has a structure that is adapted to the driver **340,** and includes a hydraulic sensor, for example. The operation switches **210** include an implement switch **213** to manipulate the operation of the implement **300.**

By sending a command to control the operation of the driver **340** to the controller **380,** the controller 180 is configured or programmed to control the operation of the implement **300.** In a case where the work vehicle **100** is operating via manual operation of the driver, the controller 180 is configured or programmed to control the operation of the implement **300** by sending a command to the controller **380** to control the operation of the driver **340,** in response to the driver's manipulation of the implement switch **213.**

In the recording mode, the controller **180** is configured or programmed to acquire or generate, as second information, information concerning the state of the implement **300,** based on sensor data that is output from the implement sensor **302.** For example, the controller **380** may be configured or programmed to generate second information concerning the state of the implement **300** based on sensor data that is output from the implement sensor **302,** and transmit the second information to the controller **180.** Alternatively, the controller **180** may be configured or programmed to receive sensor data that is output from the implement sensor **302,** and generate information concerning the state of the implement **300** via the controller **380.** In such a case, in the reproducing mode, the controller 180 is configured or programmed to control the operation of the implement **300** by causing the controller **380** to control the operation of the driver **340** based on the second information that was recorded in the recording mode.

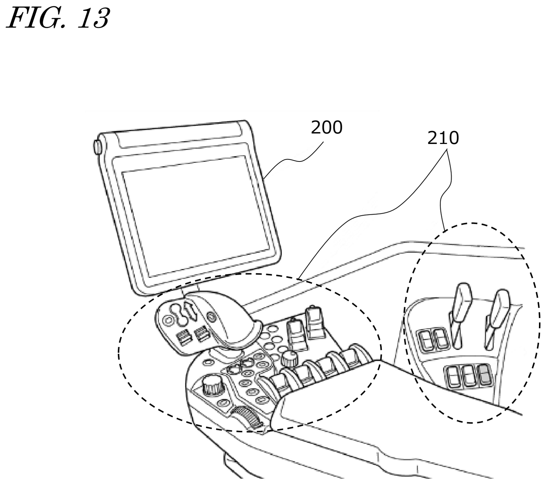

FIG. **13** is a diagram showing an example of an operation terminal **200** and operation switches **210** provided inside the cabin **105** of the work vehicle **100.** Inside the cabin **105,** operation switches **210** including a plurality of switches that can be manipulated by the driver are provided. The operation switches **210** may include examples of operation switches that have been described with reference to FIG. **12A****,** FIG. **12B****,** and FIG. **12C****.**

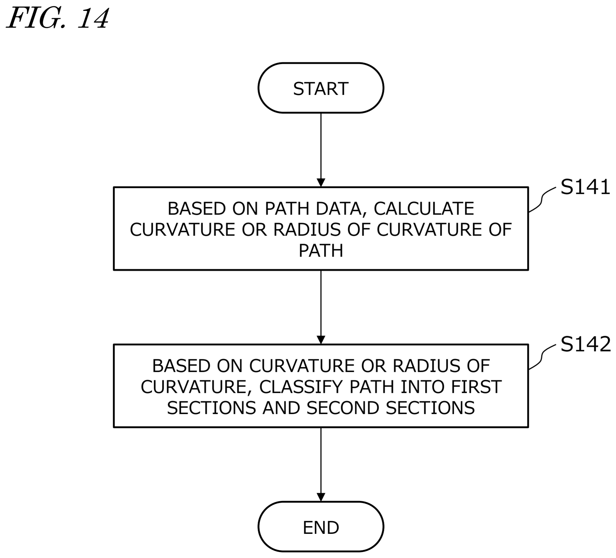

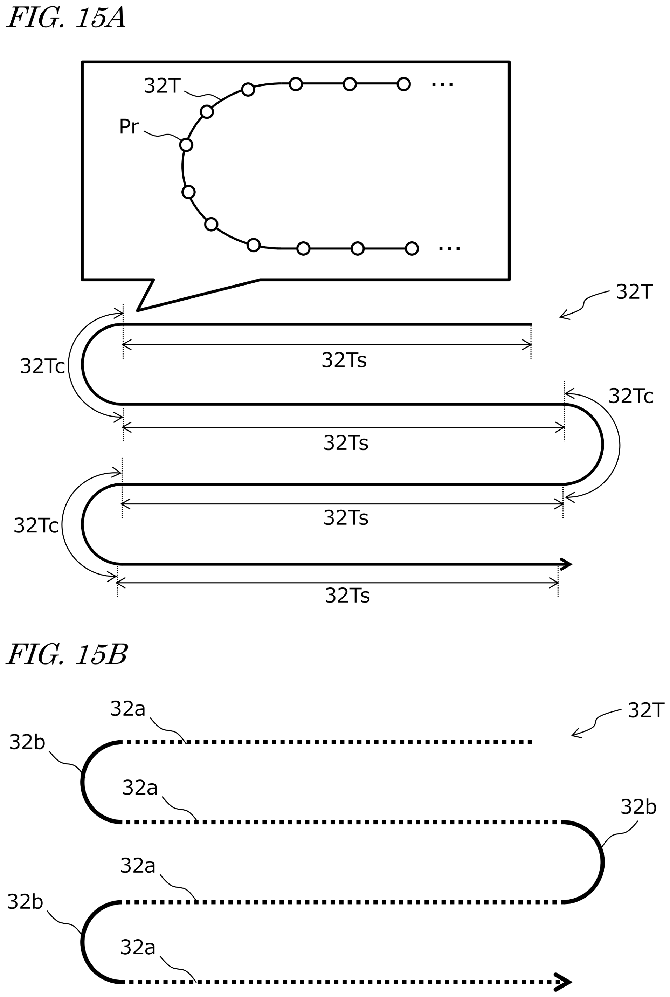

FIG. **14** is a flowchart showing an example processing to be performed by the controller **180.** FIG. **15A** and FIG. **15B** are schematic diagrams for describing the processing performed by the controller **180** in the example of FIG. **14****.** The processing shown in FIG. **14** may be performed, for example, after the recording mode is ended, i.e., after recording of multiple pieces of waypoint data is finished and before self-driving in the reproducing mode is begun.

At step **S141,** based on the recorded path data, the controller **180** calculates a curvature or radius of curvature of the path. For example, the controller **180** acquires path data (i.e., multiple pieces of waypoint data) that is recorded in the storage device **870).** FIG. **15A** schematically shows an example of path data that is recorded in the storage device **870.** A path **32T** is defined by multiple pieces of waypoint data **Pr,** although only some of the waypoint data **Pr** is depicted within a balloon in the figure, for simplicity. The path **32T** is a path of traveling within a field, for example. The path **32T** includes a plurality of parallel main paths **32Ts** and a plurality of turning paths **32Tc** connecting between the plurality of main paths **32Ts.** As in the example shown in FIG. **6A****,** for instance, each of the plurality of main paths **32Ts** may be a path of traveling between two adjacent crop rows (e.g., rows of trees). In such a case, each of the plurality of turning paths **32Tc** may be a path of turning in a headland before and after traveling between the two adjacent crop rows. When traveling along such a path, the work vehicle **100** may perform a task using the implement **300** while traveling along the main paths **32Ts,** but does not perform any task using the implement **300** when traveling along the turning paths **32Tc,** for example.

Based on the acquired waypoint data **Pr,** the controller **180** calculates a curvature, or a radius of curvature (i.e., an inverse of curvature), at each point on the path **32T.** Since a radius of curvature is an inverse of curvature, calculating one of a curvature or a radius of curvature allows the other to be determined as an inverse thereof. A method of calculating a curvature or a radius of curvature will be described below.

At step **S142,** based on the curvature calculated at step **S141,** the controller **180** classifies the path **32T** into first sections **32a** having a curvature that is equal to or less than a threshold and second sections **32b** having a curvature that is greater than the threshold. The controller **180** may perform the path classification based on the radius of curvature of the path as calculated at step **S141.** When the classification is based on the radius of curvature, the classification may be made between first sections **32a** having a radius of curvature equal to or greater than a threshold and second sections **32b** having a radius of curvature smaller than the threshold, for example. The threshold for radius of curvature is different from the threshold for curvature. In this example, the plurality of main paths **32Ts** may be classified as first sections **32a,** whereas the plurality of turning paths **32Tc** may be classified as second sections **32b.** In the figure, first sections **32a** are indicated by dotted lines, whereas second sections **32b** are indicated by solid lines. As in this example, a path may include a plurality of first sections and a path may include a plurality of second sections. In a case where the path includes a plurality of first sections, a second section may exist between adjacent first sections. In a case where the path includes a plurality of second sections, a first section may exist between adjacent second sections.

By performing the aforementioned path classification prior to beginning self-driving under the reproducing mode, the controller **180** can, between first sections and second sections, vary the control method for the operation of the work vehicle **100** in the reproducing mode, for example. As a result of this, iterative operations of the work vehicle **100** can be efficiently performed. Examples of varying the control method or the like for the operation of the work vehicle **100** in the reproducing mode between first sections and second sections will be described below.

For example, in the reproducing mode, the controller **180** varies the operation of the work vehicle **100** (which in this example is the traveling state of the work vehicle **100)** between when the work vehicle **100** is traveling in a first section and when the work vehicle **100** is traveling in a second section.

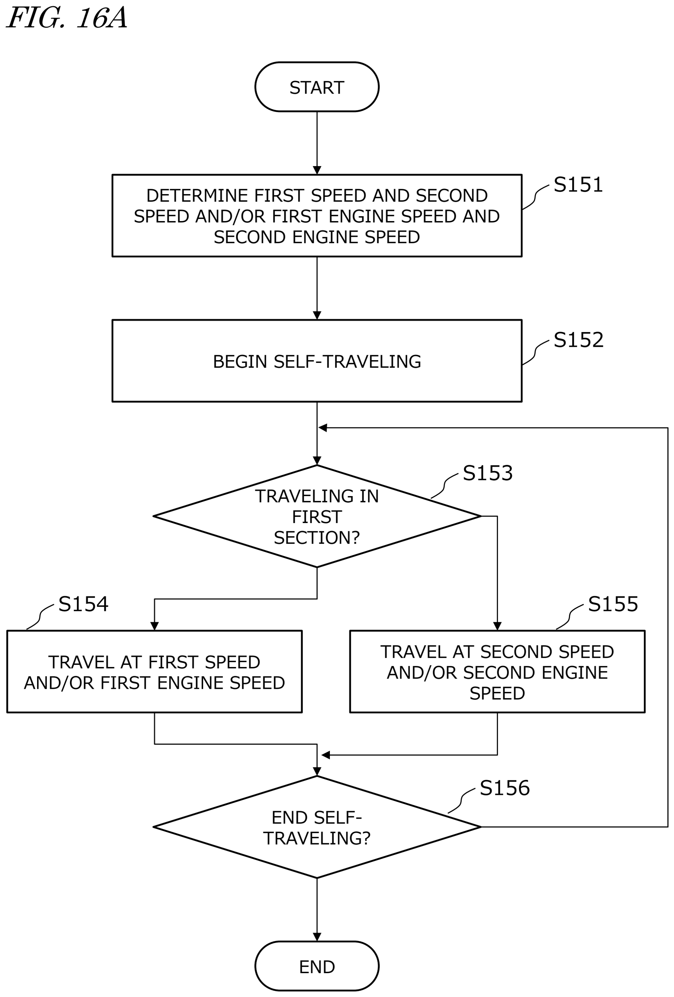

FIG. **16A** is a flowchart showing an example processing to be performed by the controller **180** in the reproducing mode. In this example, in the reproducing mode, the controller **180** varies the speed and/or the engine speed of the work vehicle **100** between when the work vehicle **100** is traveling in a first section and when the work vehicle **100** is traveling in a second section, for example.

At step **S151,** the controller **180** determines a first speed and a second speed of the work vehicle **100** and/or a first engine speed and a second engine speed of the work vehicle 100. The second speed is smaller than the first speed. The second engine speed is smaller than the first engine speed.

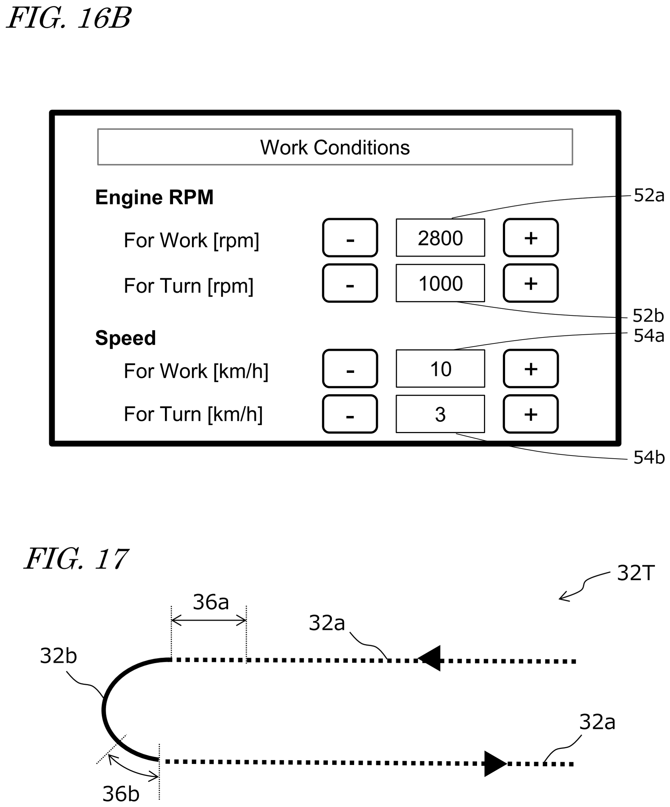

The determination of the first speed and the second speed is made based on a user input, for example. The determination of the first engine speed and the second engine speed is made based on a user input, for example. FIG. **16B** shows an example of a screen image to be displayed on a terminal device that is operated by a user who performs manipulations under the reproducing mode. The screen image of FIG. **16B** includes a GUI for allowing the user to make settings under the reproducing mode. In the screen image of FIG. **16B****,** the user can input the first speed and the second speed in boxes **54a** and **54b,** respectively, and input the first engine speed and the second engine speed in boxes **52a** and **52b,** respectively.

At step **S152,** the controller **180** begins self-traveling of the work vehicle **100** under the reproducing mode. In the self-traveling, while the work vehicle **100** is traveling in a first section of the path ("Yes" from step **S153),** the controller **180** causes the work vehicle **100** to travel at the first speed and/or the first engine speed at step **S154.** During self-traveling, while the work vehicle **100** is traveling in a second section of the path ("No" from step **S153),** the controller **180** causes the work vehicle **100** to travel at the second speed and/or the second engine speed at step **S155.** In other words, even when information of speed and/or engine speed is included in the second information included in the multiple pieces of waypoint data, self-traveling of the work vehicle **100** is performed by using the values determined in step **S151.** Until a signal including an instruction to end self-traveling of the work vehicle **100** under the reproducing mode is received (step **S156),** the controller **180** repeats the processes of step **S153,** step **S154** and step **S155.**

Because the controller **180** can vary the operation of the work vehicle **100** between when the work vehicle **100** is traveling in a first section and when the work vehicle **100** is traveling in a second section in the reproducing mode, control of the operation of the work vehicle **100** can be efficiently performed. As in the above-described example, a speed and/or an engine speed that is different from the second information included in the multiple pieces of waypoint data may be set. For example, in a case of using an implement that is distinct from the implement that has actually traveled along that path in the recording mode, self-driving under the reproducing mode can be performed in a control method that is determined in accordance with the type of the implement, whereby the recorded data can be effectively utilized.

Note that, in a case where the second information included in the multiple pieces of waypoint data includes information of the speed of the work vehicle **100,** determination of the first speed and the second speed may be made based on the second information. In other words, within the path data, based on the second information included in the multiple pieces of waypoint data that have been classified into first sections, the controller **180** can determine a first speed, and, based on second information included in the multiple pieces of waypoint data that have been classified into second sections, determine a second speed.

FIG. **17** is a schematic diagram of the path **32T** for describing another example processing to be performed by the controller **180.**

FIG. **17** only shows a portion of the path **32T.** As shown in FIG. **15B****,** the path **32T** includes a plurality of first sections **32a** and a plurality of second sections **32b** connecting between a plurality of first sections **32a.** In this example, the controller **180** can decelerate the work vehicle **100** while the work vehicle **100** is traveling in a first section in the reproducing mode, and accelerate the work vehicle **100** while the work vehicle **100** is traveling in a second section in the reproducing mode. For example, as shown in FIG. **17****,** while the work vehicle **100** is traveling in a first section **32a** in the reproducing mode, the controller **180** may decelerate the work vehicle **100** in a portion **36a** leading to a second section **32b.** While the work vehicle is traveling in a second section **32b** in the reproducing mode, the controller **180** may accelerate the work vehicle **100** in a portion **36b** leading to a first section **32a.**

By performing such control of self-traveling of the work vehicle **100,** travel can be carried out in a more smooth manner based on the first and second speeds and/or the first and second engine speeds in a case where self-traveling of the work vehicle **100** is performed as in the example of FIG. **16A****,** for instance.

In the reproducing mode, the controller **180** may vary the state of the linkage device **108** for enabling linking of the implement **300** between when the work vehicle **100** is traveling in a first section and when the work vehicle **100** is traveling in a second section. For example, in the reproducing mode, the controller **180** may vary the height of a three-point hitch that adjusts the height of the implement **300,** or switch rotation ON or OFF of the PTO shaft for supplying motive power to the implement **300,** between when the work vehicle **100** is traveling in a first section and when the work vehicle **100** is traveling in a second section. For example, in the reproducing mode, the controller **180** ensures that the height of the three-point hitch assumed when the work vehicle **100** is traveling in a second section is higher than the height of the three-point hitch assumed when the work vehicle **100** is traveling in a first section. For example, in the reproducing mode, the controller **180** may turn rotation of the PTO shaft ON when the work vehicle **100** is traveling in a first section, and turn rotation of the PTO shaft OFF when the work vehicle **100** is traveling in a second section. By controlling the height of the three-point hitch and/or rotation of the PTO shaft in the above manner, it becomes possible to efficiently perform travel and other operations of the work vehicle **100** traveling among a plurality of crop rows within a field while performing work, as in the example of FIG. **6A****.**

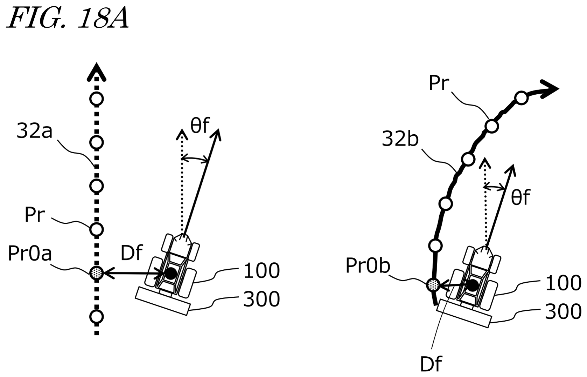

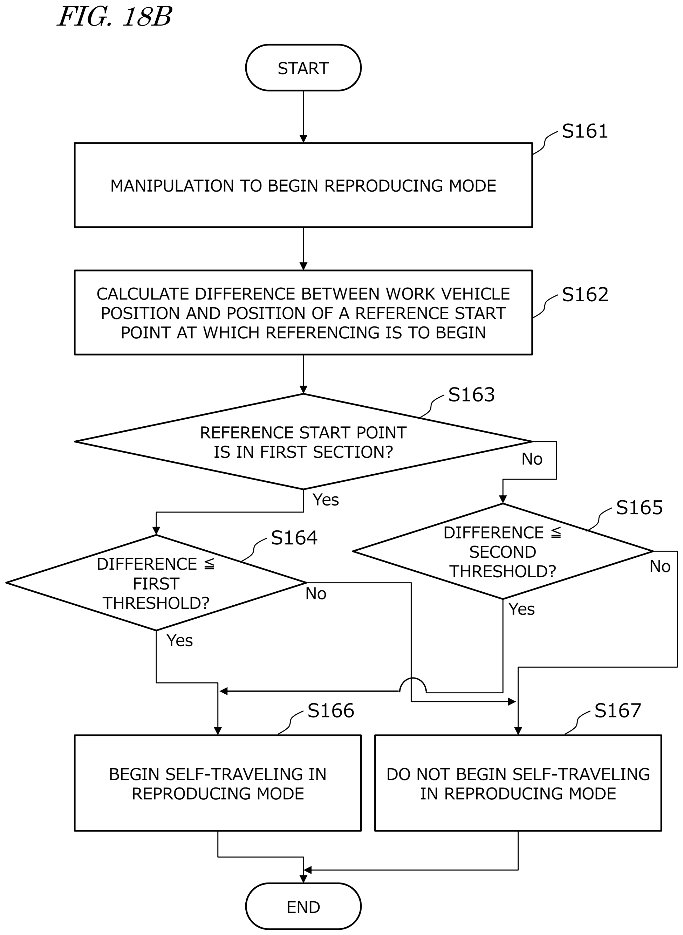

FIG. **18A** is a schematic diagram of the path **32T** and the work vehicle **100** for describing an example processing that is performed by the controller **180.** FIG. **18B** is a flowchart showing an example processing that is performed by the controller **180** when a manipulation for beginning the reproducing mode is made. FIG. **18A** provides a schematic diagram of a situation where the work vehicle **100** is about to begin self-driving under the reproducing mode by using path data of the path **32T.** In this example, self-driving under the reproducing mode is about to begin midway the path **32T.** Shown on the left side of FIG. **18A** is an example where self-driving under the reproducing mode is about to begin with waypoint data **Pr0a** of a first section **32a** of the path **32T** as a reference start point. Shown on the right side of FIG. **18A** is an example where self-driving under the reproducing mode is about to begin with waypoint data **PrOb** of a second section **32b** of the path **32T** as a reference start point.

At step **S161,** the controller **180** receives a signal including an instruction to begin self-driving under the reproducing mode. For example, when a manipulation for beginning self-driving under the reproducing mode is made by e.g. the user, the controller **180** receives a signal including an instruction to begin self-driving under the reproducing mode. For example, the user may operate an input device such as the operation terminal **200** to perform the manipulation for beginning self-driving under the reproducing mode. The manipulation for beginning self-driving under the reproducing mode includes a manipulation for specifying path data to be used in the reproducing mode. At step **S161,** the controller **180** may also receive a signal that specifies path data to be used in the reproducing mode. In this example, path data concerning the path **32T** is specified. Furthermore, at step **S161,** the controller **180** may also acquire position data concerning the position of the work vehicle **100.**

At step **S162,** the controller **180** calculates a difference **Df** between the position of the work vehicle **100** when the signal at step **S161** is received (e.g., the position of a reference point on the work vehicle **100),** and the position of a reference start point at which referencing is to begin with the manipulation at step **S161,** in the path data that is specified by the signal received in step **S161.** As the reference start point, the controller **180** may specify waypoint data **Pr** that is the closest from the position of the work vehicle **100** when receiving the signal in step **S161,** for example.

The controller **180** compares the difference **Df** calculated in step **S162** against a predetermined value (threshold). If the reference start point is included in a first section of the path ("Yes" from step **S163)** as in the left example of FIG. **18A****,** the controller **180** compares the difference **Df** calculated in step **S162** against a first predetermined value. If the difference **Df** calculated in step **S162** is equal to or less than the first predetermined value ("Yes" from step **S164),** then at step **S166,** the controller **180** begins self-traveling of the work vehicle **100.** If the difference **Df** calculated in step **S162** is greater than the first predetermined value ("No" from step **S164),** then at step **S167,** the controller **180** ends the process without beginning self-traveling of the work vehicle **100.**

If the reference start point is included in a second section of the path ("No" from step **S163)** as in the right example of FIG. **18A****,** the controller **180** compares the difference **Df** calculated in step **S162** against a second predetermined value. The second predetermined value is smaller than the first predetermined value. If the difference **Df** calculated in step **S162** is equal to or less than the second predetermined value ("Yes" from step **S165),** then at step **S166,** the controller **180** begins self-traveling of the work vehicle **100.** If the difference **Df** calculated in step **S162** is greater than the second predetermined value ("No" from step **S165),** then at step **S167,** the controller **180** ends the process without beginning self-traveling of the work vehicle **100.**

Thus, the controller **180** can set a more stringent condition for beginning self-driving under the reproducing mode for a second section than for a first section. In other words, the threshold for deviation in position from a target path can be made smaller in a second section than in a first section. Because a second section has a larger curvature than does a first section, in order to accurately track a target path that is defined by the path data, any deviation from the target path in the second section at the beginning is preferably smaller than in the first section. Because the controller **180** performs the aforementioned control method, it is possible to accurately track the target path.

As the condition for beginning self-driving under the reproducing mode, the controller **180** may also set a smaller threshold for deviation in an azimuth from a target path for a second section than for a first section. In other words, when a manipulation for causing the work vehicle **100** to begin traveling in the reproducing mode is made by the user, the controller **180** compares, against a predetermined value (threshold), a difference **θf** between the azimuth of the work vehicle **100** when the manipulation is made and the azimuth of the work vehicle at a reference start point in the path data at which referencing is to begin with the manipulation. In FIG. **18A****,** the azimuth of the work vehicle **100** when a manipulation for causing the work vehicle **100** to begin traveling in the reproducing mode is made is indicated with a solid arrow, whereas the azimuth of the work vehicle at the reference start point **Pr0a or PrOb** is indicated with a dotted arrow. The controller **180** begins self-traveling of the work vehicle **100** when the difference **θf** in azimuth is equal to or less than the predetermined value, but does not begin self-traveling of the work vehicle **100** when the difference **θf** in azimuth is greater than the predetermined value. The predetermined value (threshold) is made greater when the reference start point is included in a first section of the path than when the reference start point is included in a second section of the path.

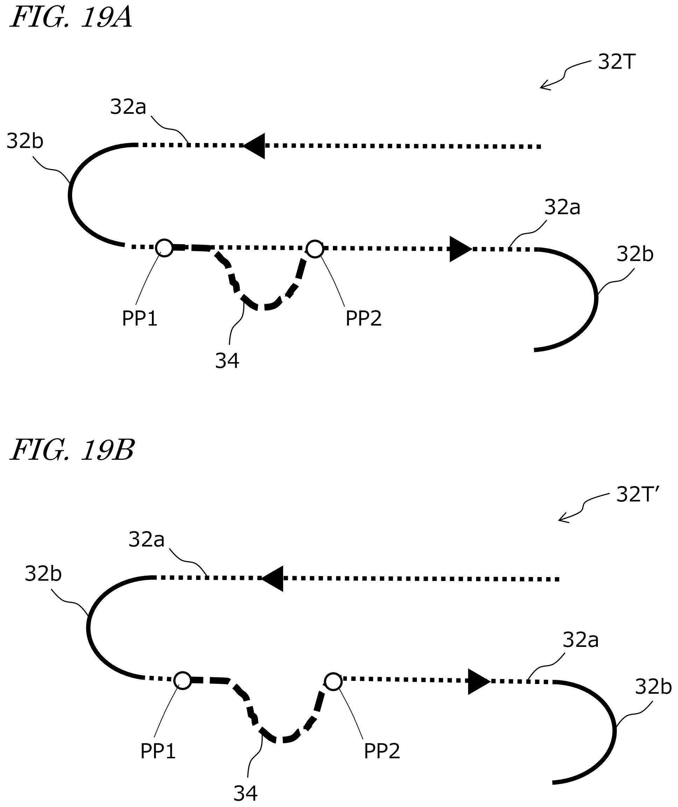

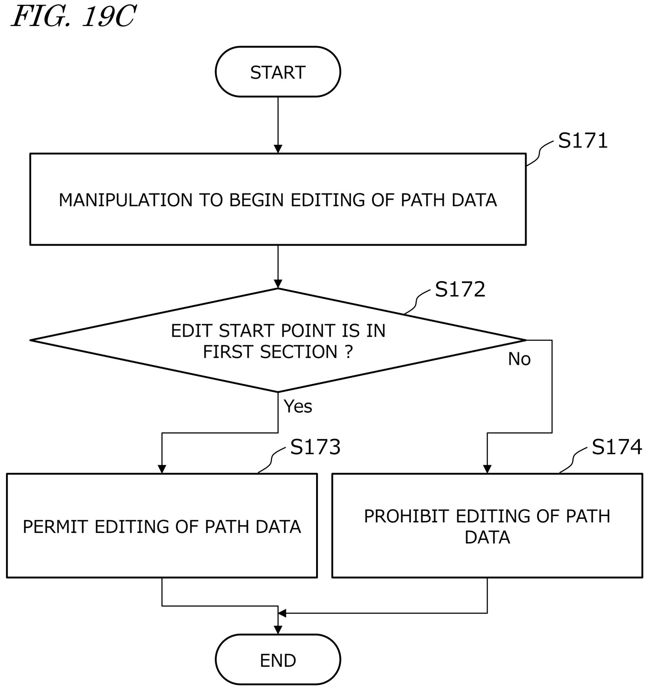

FIG. **19A** and FIG. **19B** are schematic diagrams of the path **32T** for describing an example processing that is performed by the controller **180.** FIG. **19C** is a flowchart showing an example processing that is performed by the controller **180.**

FIG. **19A** and FIG. **19B** schematically show editing of path data being performed. In this example, editing of path data is being performed by replacing a portion of the path **32T** (which herein is a path between position **PP1** and position **PP2)** with a newly generated path **34** connecting between position **PP1** and position **PP2.** The post-edit path is shown as path **"32T'"** in FIG. **19B****.** Such editing of path data may be performed as the work vehicle **100** actually travels along the path **34** between position **PP1** and position **PP2,** for example. After the editing is performed, the controller **180** records path data of the post-edit path **32T'** to the storage device **870.** Both of the path data of the pre-edit path **32T** and the path data of the post-edit path **32T'** may be recorded to the storage device **870.**

FIG. **19C** shows an example processing that is performed by the controller **180** when a manipulation for beginning editing of path data is made.

As shown in FIG. **19C****,** at step **S171,** the controller **180** receives a signal including an instruction to begin editing of path data. For example, when a manipulation for beginning editing of path data is performed by e.g. the user (e.g., the driver of the work vehicle **100),** the controller **180** receives a signal including an instruction to begin editing of path data. For example, the user may operate an input device such as the operation terminal **200** to perform the manipulation for beginning editing of path data. In the example of FIG. **19A** and FIG. **19B****,** the manipulation for beginning editing of path data may be performed in a state where the work vehicle **100** is located at position **PP1.** The manipulation for beginning self-driving under the reproducing mode includes a manipulation for specifying path data to be used in the reproducing mode. At step **S171,** the controller **180** may also receive a signal that specifies path data to be used in the reproducing mode. In this example, path data concerning the path **32T** is specified. Moreover, at step **S171,** the controller **180** may also acquire position data concerning the position of the work vehicle **100.**

At step **S172,** the controller **180** determines whether the point at which editing is to be begun ("edit start point") is included in a first section of the path **32T** or not. If the edit start point is included in a first section of the path **32T** ("Yes" from step **S172),** editing of the path data of the path **32T** is permitted to be begun. If the edit start point is included in a second section of the path **32T** ("No" from step **S172),** editing of the path data of the path **32T** is not permitted to be begun.

Thus, the controller **180** can permit editing of path data only in first sections. Because a second section has a larger curvature than does a first section, if editing of path data occurs midway a second section, the accuracy of path tracking may not be sufficient when the work vehicle **100** comes to a junction, for example. Because the controller **180** performs the aforementioned control method, it becomes possible to accurately track a target path that is defined by the post-edit path data.

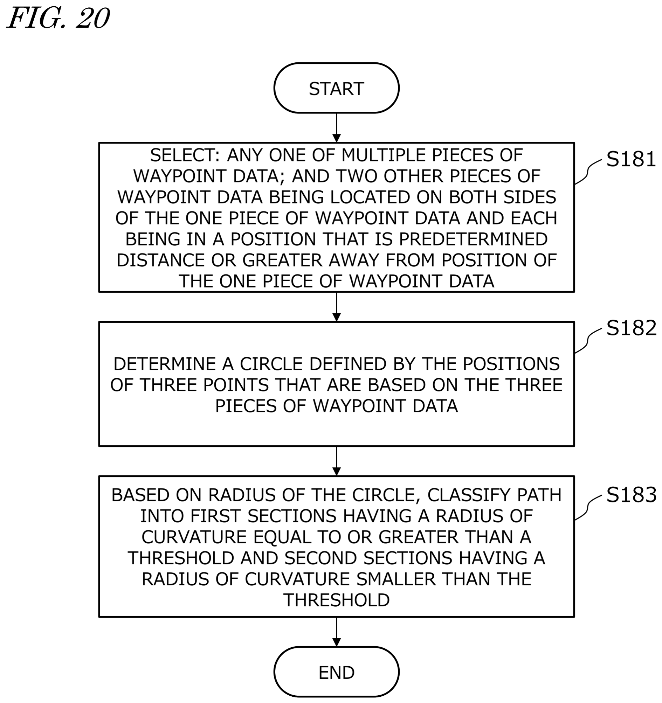

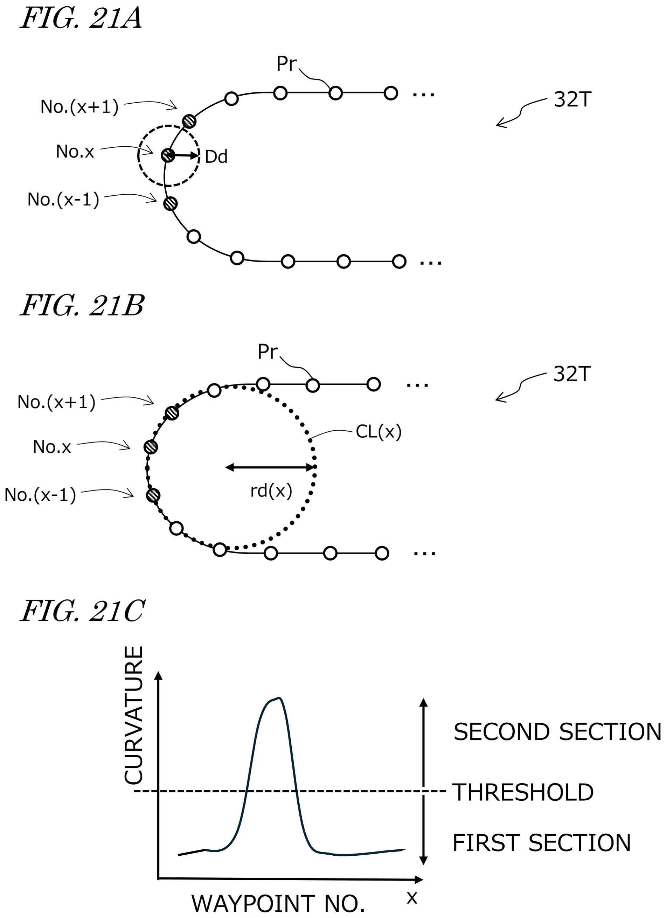

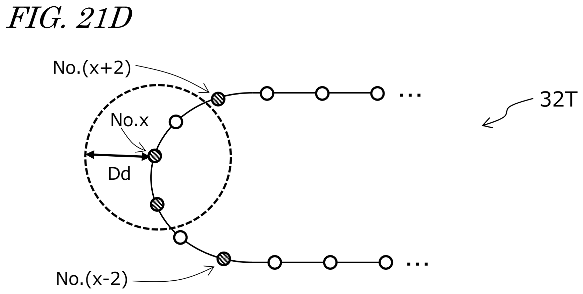

FIG. **20** is a flowchart showing an example processing to be performed by the controller **180.** FIG. **21A,** FIG. **21B,** FIG. **21C** and FIG. **21D** are schematic diagrams for describing an example method of classifying a path into first sections and second sections. With reference to FIG. **20** as well as FIGS. **21A** to **21D****,** the example method of classifying a path into first sections and second sections will be described.

As shown in FIG. **20****,** at step **S181,** the controller **180** selects three pieces of waypoint data including any one of the multiple pieces of waypoint data included in the path data, and two other pieces of waypoint data being located on both sides of the one piece of waypoint data and each being in a position that is a predetermined distance or greater away from the position of the one piece of waypoint data.

FIG. **21A** is a diagram schematically showing an example of path data that is recorded in the storage device **870,** depicting a portion of the path data of the path **32T.** In the example of FIG. **21A****,** from among the multiple pieces of waypoint data **Pr** included in the path data of the path **32,** the controller **180** selects three pieces of waypoint data No. (x-1) to No. (x+1), including, waypoint data No. x, and two other pieces of waypoint data No. (x-1) and No. (x+1) being located on both sides of waypoint data No. x and each being in a position that is a predetermined distance **Dd** or greater away from the position of waypoint data No. x. The two pieces of waypoint data located on both sides of waypoint data No. x are determined by selecting, on each of the two sides, a piece of waypoint data that is the closest to waypoint data No. x, among all pieces of waypoint data that are the predetermined distance **Dd** or greater away from the position of waypoint data No. x.

The value of the predetermined distance **Dd** may be arbitrarily set. The value of the predetermined distance **Dd** may be changed in accordance with the shape of the path, for example. In the example of FIG. **21A****,** the predetermined distance **Dd** is smaller than the interval between the positions of consecutive pieces of waypoint data among the multiple pieces of waypoint data. As in the example of FIG. **21D****,** the predetermined distance **Dd** may be greater than the interval between the positions of consecutive pieces of waypoint data among the multiple pieces of waypoint data. In the example of FIG. **21D****,** three pieces of waypoint data No. (x-2), No. x and No. (x+2) are being selected, including waypoint data No. x, and two pieces of waypoint data No. (x-2) and No. (x+2) being located on both sides of waypoint data No. x and each being located the predetermined distance **Dd** or greater away from the position of waypoint data No. x.

At step **S182,** the controller **180** determines a circle defined by the positions of three points that are based on the three pieces of waypoint data selected in step **S181.** In the example of FIG. **21B****,** the controller **180** determines a circle CL(x) defined by the positions of three points that are based on the three pieces of waypoint data No. (x-1) to No. (x+1).

At step **S183,** based on the radius of the circle determined in step **S182,** the controller **180** classifies the path into first sections having a radius of curvature equal to or greater than a threshold and second sections having a radius of curvature smaller than the threshold. In the example of FIG. **21B****,** the controller **180** determines the radius rd(x) of the circle CL(x) determined in step **S182** as the radius of curvature at waypoint data No. x, for example. The controller **180** can determine the radii of curvature at the respective pieces of waypoint data, and classify them into first sections having a radius of curvature equal to or greater than a threshold and second sections having a radius of curvature smaller than the threshold.

The controller **180** may classify a path into first sections and second sections based on the curvature of each point in the path. As described earlier, since a radius of curvature is an inverse of curvature, calculating one of a curvature or a radius of curvature allows the other to be determined as an inverse thereof. In the example of FIG. **21B****,** the controller **180** determines a curvature at waypoint data No. x based on the radius rd(x) of the circle CL(x) determined in step **S182,** for example. For instance, the curvature at waypoint data No. x can be determined as an inverse of the radius rd(x) of the circle CL(x). The controller **180** can determine the curvatures at the respective pieces of waypoint data, and classify them into first sections having a curvature that is equal to or less than a threshold and second sections having a curvature that is greater than the threshold. An example result of classification based on curvature is shown in FIG. **21C****.** In the graph of FIG. **21C****,** the horizontal axis represents waypoint No., and the vertical axis represents curvature.

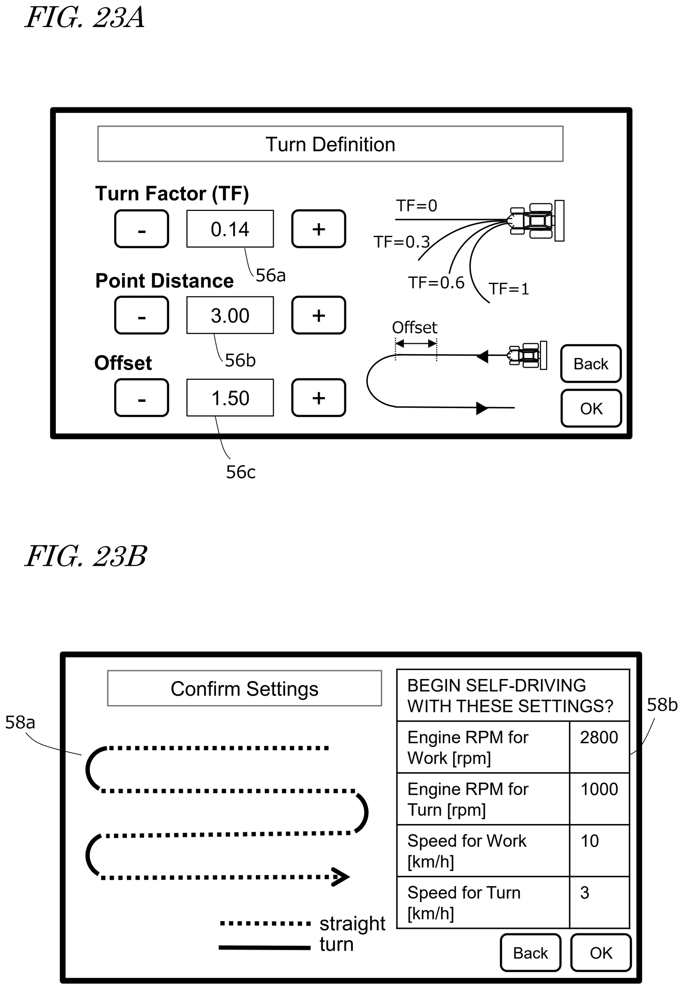

In a case where the curvature of each point in the path is used in classifying a path into first sections and second sections, the curvature may be normalized to a maximum value of all curvatures in the path, thus being represented as a value between 0 and 1. In other words, a value between 0 and 1 can be used as a threshold for curvature, which advantageously makes for the ease of the user in setting or adjusting the threshold for curvature. Moreover, a curvature may be more intuitive to the user than a radius of curvature when indicated in a screen image or on a GUI (see FIG. **23A,** FIG. **23B****,** etc. described below), for example.

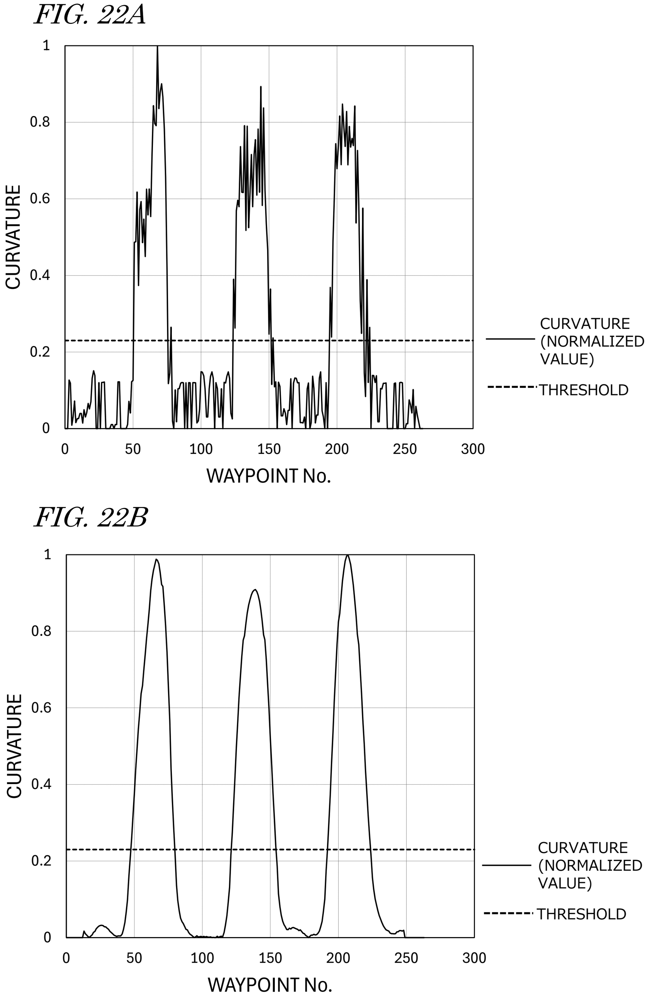

FIG. **22A** and FIG. **22B** show example results of classifying a path into first sections and second sections. In the graphs of FIG. **22A** and FIG. **22B****,** the horizontal axis represents waypoint No., and the vertical axis represents curvature (value normalized to the maximum value of all curvatures in the path). FIG. **22A** shows a result of a case where the interval between three pieces of waypoint data is less than the predetermined distance **Dd,** and FIG. **22B** shows a result of a case where the interval between three pieces of waypoint data is equal to or greater than the predetermined distance **Dd.** FIG. **22A** shows some oscillation occurring between adjacent pieces of waypoint data near the threshold, which is not preferable from the standpoint of classifying a path into first sections and second sections. On the other hand, FIG. **22B** shows less noise near the threshold.

The controller **180** may determine a threshold for curvature or radius of curvature based on a user input. The controller **180** may determine the predetermined distance **Dd** based on a user input. The controller **180** may cause a display to indicate a graphical user interface (GUI) for allowing the user to set a threshold for curvature or radius of curvature and the predetermined distance **Dd.** Example GUIs are described below.

FIG. **23A** and FIG. **23B** show examples of screen images to be displayed on a terminal device that is operated by the user performing manipulations in the reproducing mode. The screen image of FIG. **23A** includes a GUI for allowing the user to set a threshold for curvature and a GUI for allowing the user to set a predetermined distance **Dd.** In the screen image of FIG. **23A****,** the user can set (change) the threshold for curvature based on an input value in a box **56a,** and set (change) the predetermined distance **Dd** based on an input value in a box **56b.** The user can also set (change) the length of the portion **36a** (FIG. **17****)** at which the work vehicle **100** is to be decelerated based on an input value in a box **56c.**

The controller **180** may further cause an image indicating a result of classifying a path into first sections and second sections to be indicated on a display. The screen image of FIG. **23B** includes an image **58a** indicating a result of classifying a path into first sections and second sections based on the threshold for curvature and predetermined distance **Dd** that are input via the GUIs included in the screen image of FIG. **23A****.** The image **58a** is displayed in a form that allows for distinction between portions of the path that have been classified as first sections and portions that have been classified as second sections. In this example, portions that have been classified as first sections are indicated with dotted lines, whereas portions that have been classified as second sections are indicated with solid lines. The portions that have been classified as first sections and the portions that have been classified as second sections may be indicated in different colors.

The controller **180** may cause the result of classification into first sections and second sections to be displayed so as to show dynamic changes in accordance with the threshold for curvature and predetermined distance **Dd** that are input via the GUIs included in the screen image of FIG. **23A****.** In other words, when the threshold for curvature and/or the predetermined distance **Dd** that are input via the GUIs are changed, the controller **180** may allow a corresponding change in the result of classification to be made on the image **58a** in real time. While looking at the result of classifying the path into first sections and second sections, the user can set (adjust) the threshold for curvature or radius of curvature and/or the predetermined distance **Dd.** The contents of FIG. **23A** and FIG. **23B** may be displayed in a single screen image, whereby the user can enjoy an improved ease of visual recognition.

The screen image of FIG. **23B****,** in this example, further includes a notification **58b** for checking the values set via the GUI included in the screen image of FIG. **16B****.**

In example embodiments of the present invention, the methods of classifying a path into first sections and second sections are not limited to the aforementioned examples. For instance, the curvature or radius of curvature of the path may be determined by a different method from the aforementioned examples. The controller **180** may acquire information of the angular velocity around the yaw axis of the work vehicle **100** (which may be referred to as a "yaw rate") based on sensor data that is output from the sensor group **150,** and determine the curvature or radius of curvature of the path that is traveled by the work vehicle **100** based on the angular velocity around the yaw axis of the work vehicle **100,** for example.

Alternatively, the controller **180** may classify a path into first sections and second sections based on the state of the work vehicle **100.** For example, a path may be classified into first sections and second sections depending on whether the work vehicle **100** is in a predetermined travel mode or not. In a case where the aforementioned bi-speed turn mode is switchable between ON or OFF, the "predetermined travel mode" may include the bi-speed turn mode being OFF, for example. For example, the bi-speed turn mode may be turned ON in a turning path, and OFF in a straight path. Therefore, any portion that was traveled with the bi-speed turn mode OFF may be classified as a first section, and any portion that was traveled with the bi-speed turn mode ON may be classified as a second section. In another example, the controller **180** may classify a path into first sections and second sections based on the state of the linkage device **108** for enabling linking of the implement **300.**

The travel control systems according to the above example embodiments may be mounted to work vehicles lacking such functionality as an add-on. Such control systems may be manufactured and marketed independently from the work vehicle. A computer program for use in such a control system may also be manufactured and marketed independently from the work vehicle. The computer program may be provided in a form stored in a computer-readable, non-transitory storage medium, for example. The computer program may also be provided through downloading via telecommunication lines (e.g., the Internet).

The techniques according to example embodiments of the present invention are broadly applicable to various kinds of work vehicles for use in smart agriculture.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A travel control system for a work vehicle, comprising:
a positioning device to output position data concerning a position of the work vehicle; and
a controller configured or programmed to:
control operation of the work vehicle;
operate in a recording mode to record to a storage device path data concerning a path traveled by the work vehicle, the path data including multiple pieces of waypoint data acquired based on the position data while the work vehicle is traveling, each piece of the waypoint data including information concerning the position of the work vehicle;
operate in a reproducing mode to control the operation of the work vehicle while causing the work vehicle to travel via self-driving based on the path data;
classify, based on the path data, the path into a first section having a curvature that is equal to or less than a threshold and a second section having a curvature that is greater than the threshold; and
vary a control method for operation of the work vehicle in the reproducing mode between the first section and the second section.

2. The travel control system of claim 1, wherein the controller is configured or programmed to, in the reproducing mode, vary the operation of the work vehicle between when the work vehicle is traveling in the first section and when the work vehicle is traveling in the second section.

3. The travel control system of claim 2, wherein the controller is configured or programmed to, in the reproducing mode, vary a speed and/or an engine speed of the work vehicle between when the work vehicle is traveling in the first section and when the work vehicle is traveling in the second section.

4. The travel control system of claim 3, wherein the controller is configured or programmed to:
determine a first speed of the work vehicle and a second speed of the work vehicle, the second speed being smaller than the first speed;
in the reproducing mode, cause the work vehicle to travel at the first speed while the work vehicle is traveling in the first section; and
in the reproducing mode, cause the work vehicle to travel at the second speed while the work vehicle is traveling in the second section.

5. The travel control system of any one of claims 2 to 4, wherein the controller is configured or programmed to:
determine a first engine speed of the work vehicle and a second engine speed of the work vehicle, the second engine speed being smaller than the first engine speed;
in the reproducing mode, cause the work vehicle to travel at the first engine speed while the work vehicle is traveling in the first section; and
in the reproducing mode, cause the work vehicle to travel at the second engine speed while the work vehicle is traveling in the second section.

6. The travel control system of any one of claims 2 to 5, wherein the controller is configured or programmed to:
in the reproducing mode, decelerate the work vehicle while the work vehicle is traveling in the first section; and
in the reproducing mode, accelerate the work vehicle while the work vehicle is traveling in the second section.

7. The travel control system of claim 6, wherein
the path includes a plurality of the first sections and a plurality of the second sections by which the plurality of first sections are connected; and
the controller is configured or programmed to:
while the work vehicle is traveling in the first section in the reproducing mode, decelerate the work vehicle in a portion leading to the second section; and,
while the work vehicle is traveling in the second section in the reproducing mode, accelerate the work vehicle in a portion leading to the first section.

8. The travel control system of any one of claims 2 to 7, wherein
the work vehicle has an implement linked thereto;
the work vehicle includes a linkage device to which the implement is connected;
the linkage device includes a three-point hitch to adjust a height of the implement; and
the controller is configured or programmed to, in the reproducing mode, vary the height of the three-point hitch between when the work vehicle is traveling in the first section and when the work vehicle is traveling in the second section.

9. The travel control system of any one of claims 2 to 8, wherein
the work vehicle has an implement linked thereto;
the work vehicle includes a linkage device to which the implement is connected;
the linkage device includes a PTO shaft to supply motive power to the implement; and
the controller is configured or programmed to, in the reproducing mode, switch rotation of the PTO shaft ON or OFF between when the work vehicle is traveling in the first section and when the work vehicle is traveling in the second section.

10. The travel control system of claim 9, wherein the controller is configured or programmed to:
in the reproducing mode, turn rotation of the PTO shaft ON while the work vehicle is traveling in the first section; and
in the reproducing mode, turn rotation of the PTO shaft OFF while the work vehicle is traveling in the second section.

11. The travel control system of any one of claims 1 to 10, wherein the controller is configured or programmed to, when a manipulation for causing the work vehicle to begin traveling in the reproducing mode is performed by a user:
compare, against a predetermined value, a difference between a position of the work vehicle assumed when the manipulation is performed and a position of a reference start point in the path data at which referencing is to begin with the manipulation;
cause the work vehicle to begin traveling if the difference is equal to or less than the predetermined value;
not allow the work vehicle to begin traveling if the difference is greater than the predetermined value; and
ensure that the predetermined value is smaller when the reference start point is included in the second section than when the reference start point is included in the first section.

12. The travel control system of any one of claims 1 to 11, wherein the controller is configured or programmed to, when a manipulation for causing the work vehicle to begin traveling in the reproducing mode is performed by a user:
compare, against a predetermined value, a difference between an azimuth of the work vehicle assumed when the manipulation is performed and an azimuth of a reference start point in the path data at which referencing is to begin with the manipulation;
cause the work vehicle to begin traveling if the difference is equal to or less than the predetermined value;
not allow the work vehicle to begin traveling if the difference is greater than the predetermined value; and
ensure that the predetermined value is smaller when the reference start point is included in the second section than when the reference start point is included in the first section.

13. The travel control system of any one of claims 1 to 12, wherein the controller is configured or programmed to:
record, to the storage device, other path data concerning another path that is generated by editing the path data that is recorded in the storage device; and
when a manipulation for beginning editing of the path data is performed by a user:
permit editing of the path data to be begun if an edit start point is included in the first section; and
prohibit editing of the path data from beginning if the edit start point is included in the second section.

14. The travel control system of any one of claims 1 to 13, wherein
the path includes a path of traveling in a field;
the first section includes a plurality of parallel main paths; and
the second section includes a plurality of turning paths by which the plurality of main paths are connected.

15. A work vehicle comprising:
a travel control system of any one of claims 1 to 14;
a travel device including a wheel responsible for steering; and
a driver to drive the travel device; wherein
in the reproducing mode, the controller is configured or programmed to cause the work vehicle to travel via self-driving by controlling the driver based on the multiple pieces of the waypoint data included in the path data.
